# EUROPEAN PATENT APPLICATION

(11) **EP 4 572 209 A1**
(43) Date of publication of application: **18.06.2025**
(21) Application number: 23851961.5
(22) Date of filing: 10.08.2023
(51) Int. Cl.: H04L 5/00

(54) **TRANSMISSION METHOD AND APPARATUS**

(30) Priority: 10.08.2022 CN 202210956586
(71) Applicant: Datang Mobile Communications Equipment Co., Ltd., Beijing 100085 (CN)
(72) Inventor: SONG, Lei, Beijing 100085 (CN); HUANG, Qiuping, Beijing 100085 (CN); GAO, Qiubin, Beijing 100085 (CN); SI, Qianqian, Beijing 100085 (CN); LI, Hui, Beijing 100085 (CN); LUO, Yajuan, Beijing 100085 (CN)
(74) Representative: Cabinet Nony
(86) International application number: PCT/CN2023/112363
(87) International publication number: WO 2024/032741

(57) **Abstract**

Provided in the embodiments of the present disclosure are a transmission method and apparatus. The transmission method comprises: when a first-type channel and a second-type channel are to be transmitted, executing any one or more of the following: determining to transmit the first-type channel or the second-type channel; and determining to reuse content borne by the first-type channel on the second-type channel so as to carry out transmission.

## Description

### CROSS-REFERENCES TO RELATED APPLICATIONS

The present application claims priority to Chinese patent application No. 202210956586.3 filed on August 10, 2022, entitled "Transmission Method and Apparatus", which is hereby incorporated by reference in its entirety.

### FIELD

The present application relates to the field of communications, and in particular, to a transmission method and apparatus.

### BACKGROUND

A communication system supports simultaneous transmission of a physical uplink control channel (PUCCH) and a PUCCH, as well as simultaneous transmission of a physical uplink shared channel (PUSCH) and a PUSCH, but does not support simultaneous transmission of PUCCH and PUSCH. However, if a network side only schedules a terminal for PUCCH or PUSCH transmission, it results in an inability of simultaneous transmission of uplink control information (UCI) and data, and leads to increased system processing latency.

### BRIEF SUMMARY

Embodiments of the present application provide a transmission method and apparatus to solve the problem of large processing latency in the communication system in the related art and achieve reduced latency.

Embodiments of the present application provide a transmission method, including:
in case that a first type channel and a second type channel are to be transmitted, performing any one or more of the following:
determining to transmit the first type channel or the second type channel; or
determining to multiplex a content carried by the first type channel in the second type channel for transmission.

In an embodiment, determining to transmit the first type channel or the second type channel includes any one of the following:
dropping the second type channel and/or transmitting the first type channel based on a predefined rule or pre-configured information;
dropping the first type channel and/or transmitting the second type channel based on a predefined rule or pre-configured information; or
based on a pre-defined or pre-configured first rule, determining to drop the first type channel or the second type channel and/or transmitting the first type channel or the second type channel not being dropped.

In an embodiment, determining to drop the first type channel or the second type channel based on the pre-defined or pre-configured first rule includes:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
   the priority corresponding to the first type channel is a priority corresponding to the content carried by the first type channel; the priority corresponding to the second type channel is a priority corresponding to a content carried by the second type channel;
   the priority corresponding to the first type channel is a priority of the first type channel; the priority corresponding to the second type channel is a priority of the second type channel; or
   the priority corresponding to the first type channel is a priority corresponding to a transmission scheme of the first type channel; the priority corresponding to the second type channel is a priority corresponding to a transmission scheme of the second type channel.

In an embodiment, the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

In an embodiment, determining to drop the first type channel or the second type channel based on the pre-defined or pre-configured first rule includes any one or more of the following:
determining to drop a channel corresponding to a lowest priority between the first type channel and the second type channel;
determining to drop the first type channel or the second type channel based on a priority corresponding to transmission associated information, where the transmission associated information is information associated with the first type channel and/or the second type channel;
determining to drop a channel corresponding to a lowest priority between a first channel and a second channel, where the first channel is a channel corresponding to a highest priority among all the first type channels, and the second channel is a channel corresponding to a highest priority among all the second type channels;
determining to drop a channel corresponding to a lowest priority between a third channel and a fourth channel, where the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, where the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

In an embodiment, the priority corresponding to the transmission associated information is a lowest priority or a highest priority among a priority corresponding to each of the first type channels and/or each of the second type channels associated with the transmission associated information, or
the priority corresponding to the transmission associated information is a lowest priority or a highest priority among a priority corresponding to each of the first reference channels in the first type channels and/or each of the second reference channels in the second type channels associated with the transmission associated information.

In an embodiment, an order of the priority corresponding to the content carried by the first type channel and/or the priority corresponding to the content carried by the second type channel from high to low includes:
data, scheduling request (SR), aperiodic channel state information (A-CSI), and hybrid automatic repeat request acknowledgement (HARQ-ACK).

In an embodiment, an order of the priority corresponding to the transmission scheme of the first type channel and/or the priority corresponding to the transmission scheme of the second type channel includes:
a priority corresponding to a first transmission scheme is higher than a priority corresponding to a single transmission, where the first transmission scheme includes any one or more of the following: frequency division multiplexing (FDM) based repetition or space division multiplexing (SDM) based repetition, time division multiplexing (TDM) based repetition, or, FDM based simultaneous transmission or SDM based simultaneous transmission; or
a priority corresponding to a single transmission is higher than a priority corresponding to a second transmission scheme, where the second transmission scheme includes any one or more of the following: frequency division multiplexing (FDM) based repetition or space division multiplexing (SDM) based repetition, time division multiplexing (TDM) based repetition, or, FDM based simultaneous transmission or SDM based simultaneous transmission; or
a priority corresponding to a single transmission is higher than a priority corresponding to a third transmission scheme, and the priority corresponding to the single transmission is lower than a priority corresponding to a fourth transmission scheme, where the third transmission scheme and the fourth transmission scheme include any one or more of the following:
   frequency division multiplexing (FDM) based repetition or space division multiplexing (SDM) based repetition, time division multiplexing (TDM) based repetition, or, FDM based simultaneous transmission or SDM based simultaneous transmission.

In an embodiment, determining to drop the first type channel or the second type channel based on the pre-defined or pre-configured first rule includes:
determining to drop the first type channel or the second type channel based on a first value corresponding to the first type channel and a second value corresponding to the second type channel.

In an embodiment, the first value corresponding to the first type channel is a value of a third reference channel among all the first type channels, and the second value corresponding to the second type channel is a value of a fourth reference channel among all the second type channels.

In an embodiment, dropping the second type channel and/or transmitting the first type channel includes:
dropping the second type channel and/or transmitting the first type channel before uplink control information (UCI) multiplexing; or
dropping the second type channel and/or transmitting the first type channel after uplink control information (UCI) multiplexing;
dropping the first type channel and/or transmitting the second type channel includes:
   dropping the first type channel and/or transmitting the second type channel before UCI multiplexing; or
   dropping the first type channel and/or transmitting the second type channel after UCI multiplexing.

In an embodiment, determining to multiplex the content carried by the first type channel in the second type channel for transmission includes:
in case of presence of the first type channel and the second type channel, multiplexing the content carried by the first type channel in the second type channel.

In an embodiment, determining to multiplex the content carried by the first type channel in the second type channel for transmission includes:
determining a target channel in the second type channel; and
determining to multiplex the content carried by the first type channel on the target channel for transmission.

In an embodiment, determining the target channel in the second type channel includes:
determining the target channel as a channel corresponding to a highest priority among all the second type channels.

In an embodiment, the method further includes:
determining the target channel based on a first order, where the first order includes any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times; or
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission;
the first CC index is a smallest index, or a predefined index, or a largest index among all CC indexes.

In an embodiment, determining to multiplex the content carried by the first type channel in the second type channel for transmission includes any one or more of the following:
transmitting multiple second type channels over a time unit of a CC with the first CC index, and in case that the time unit contains simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels;
determining one or more second type channels based on a transmission time of the first type channel and/or the second type channel, and in case that the one or more second type channels include a simultaneous transmission, multiplexing the first type channel in one or more simultaneously transmitted second type channels for transmission; or
in case that the second type channel is simultaneously transmitted, multiplexing the content carried by the first type channel in the second type channel for transmission based on a parameter *CORESETPoolIndex.*

Embodiments of the present application further provide a first communication device, including a memory, a transceiver, and a processor, where
the memory is used for storing a computer program; the transceiver is used for receiving and transmitting data under control of the processor; and the processor is used for reading the computer program in the memory and performing the steps of the transmission method as described above.

Embodiments of the present application further provide a transmission apparatus, including:
a first performing module, used for in case that a first type channel and a second type channel are to be transmitted, performing any one or more of the following:
determining to transmit the first type channel or the second type channel; or
determining to multiplex a content carried by the first type channel in the second type channel for transmission.

In an embodiment, the first performing module is used for any one of the following:
dropping the second type channel and/or transmitting the first type channel based on a predefined rule or pre-configured information;
dropping the first type channel and/or transmitting the second type channel based on a predefined rule or pre-configured information; or
based on a pre-defined or pre-configured first rule, determining to drop the first type channel or the second type channel and/or transmitting the first type channel or the second type channel not being dropped.

In an embodiment, the first performing module is used for:
determining to drop the first type channel or the second type channel based on the pre-defined or pre-configured first rule, including:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
   the priority corresponding to the first type channel is a priority corresponding to the content carried by the first type channel; the priority corresponding to the second type channel is a priority corresponding to a content carried by the second type channel;
   the priority corresponding to the first type channel is a priority of the first type channel; the priority corresponding to the second type channel is a priority of the second type channel; or
   the priority corresponding to the first type channel is a priority corresponding to a transmission scheme of the first type channel; the priority corresponding to the second type channel is a priority corresponding to a transmission scheme of the second type channel.

In an embodiment, the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

In an embodiment, the first performing module is used for any one or more of the following:
determining to drop a channel corresponding to a lowest priority between the first type channel and the second type channel;
determining to drop the first type channel or the second type channel based on a priority corresponding to transmission associated information, where the transmission associated information is information associated with the first type channel and/or the second type channel;
determining to drop a channel corresponding to a lowest priority between a first channel and a second channel, where the first channel is a channel corresponding to a highest priority among all the first type channels, and the second channel is a channel corresponding to a highest priority among all the second type channels;
determining to drop a channel corresponding to a lowest priority between a third channel and a fourth channel, where the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, where the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

In an embodiment, the priority corresponding to the transmission associated information is a lowest priority or a highest priority among a priority corresponding to each of the first type channels and/or each of the second type channels associated with the transmission associated information, or
the priority corresponding to the transmission associated information is a lowest priority or a highest priority among a priority corresponding to each of the first reference channels in the first type channels and/or each of the second reference channels in the second type channels associated with the transmission associated information.

In an embodiment, an order of the priority corresponding to the content carried by the first type channel and/or the priority corresponding to the content carried by the second type channel from high to low includes:
data, scheduling request (SR), aperiodic channel state information (A-CSI), and hybrid automatic repeat request acknowledgement (HARQ-ACK).

In an embodiment, an order of the priority corresponding to the transmission scheme of the first type channel and/or the priority corresponding to the transmission scheme of the second type channel includes:
a priority corresponding to a first transmission scheme is higher than a priority corresponding to a single transmission, where the first transmission scheme includes any one or more of the following: frequency division multiplexing (FDM) based repetition or space division multiplexing (SDM) based repetition, time division multiplexing (TDM) based repetition, or, FDM based simultaneous transmission or SDM based simultaneous transmission; or
a priority corresponding to a single transmission is higher than a priority corresponding to a second transmission scheme, where the second transmission scheme includes any one or more of the following: frequency division multiplexing (FDM) based repetition or space division multiplexing (SDM) based repetition, time division multiplexing (TDM) based repetition, or, FDM based simultaneous transmission or SDM based simultaneous transmission; or
a priority corresponding to a single transmission is higher than a priority corresponding to a third transmission scheme, and the priority corresponding to the single transmission is lower than a priority corresponding to a fourth transmission scheme, where the third transmission scheme and the fourth transmission scheme include any one or more of the following:
frequency division multiplexing (FDM) based repetition or space division multiplexing (SDM) based repetition, time division multiplexing (TDM) based repetition, or, FDM based simultaneous transmission or SDM based simultaneous transmission.

In an embodiment, the first performing module is used for:
determining to drop the first type channel or the second type channel based on a first value corresponding to the first type channel and a second value corresponding to the second type channel.

In an embodiment, the first value corresponding to the first type channel is a value of a third reference channel among all the first type channels, and the second value corresponding to the second type channel is a value of a fourth reference channel among all the second type channels.

In an embodiment, the first performing module is used for:
dropping the second type channel and/or transmitting the first type channel before uplink control information (UCI) multiplexing;
dropping the second type channel and/or transmitting the first type channel after uplink control information (UCI) multiplexing;
the first performing module is used for:
   dropping the first type channel and/or transmitting the second type channel before UCI multiplexing; or
   dropping the first type channel and/or transmitting the second type channel after UCI multiplexing.

In an embodiment, the first performing module is used for:
in case of presence of the first type channel and the second type channel, multiplexing the content carried by the first type channel in the second type channel.

In an embodiment, the first performing module is used for:
determining a target channel in the second type channel; and
determining to multiplex the content carried by the first type channel on the target channel for transmission.

In an embodiment, the first performing module is used for:
determining the target channel as a channel corresponding to a highest priority among all the second type channels.

In an embodiment, the apparatus further includes:
a determining module, used for determining the target channel based on a first order, where the first order includes any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times; or
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission;
the first CC index is a smallest index, or a predefined index, or a largest index among all CC indexes.

In an embodiment, the first performing module is used for any one or more of the following:
transmitting multiple second type channels over a time unit of a CC with the first CC index, and in case that the time unit contains simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels;
determining one or more second type channels based on a transmission time of the first type channel and/or the second type channel, and in case that the one or more second type channels include a simultaneous transmission, multiplexing the first type channel in one or more simultaneously transmitted second type channels for transmission; or
in case that the second type channel is simultaneously transmitted, multiplexing the content carried by the first type channel in the second type channel for transmission based on a parameter *CORESETPoolIndex.*

Embodiments of the present application further provide a processor-readable storage medium storing a computer program, where the computer program is used to cause a processor to perform the steps of the transmission method as described above.

In the transmission method and apparatus provided in embodiments of the present application, in case that the first type channel and the second type channel are to be transmitted, it is determined to transmit the first type channel or the second type channel, or determined to multiplex the content carried by the first type channel in the second type channel for transmission, which effectively avoids the increased latency of the communication system due to the lack of support for simultaneous transmission of PUCCH and PUSCH, and effectively reduces the latency.

### BRIEF DESCRIPTION OF THE DRAWINGS

To illustrate the solutions in the embodiments of the present application more clearly, the drawings used in the description of the embodiments are briefly described below. The drawings in the following description are only some embodiments of the present application, and other drawings may be obtained based on these drawings without any creative effort for those skilled in the art.
FIG. 1 is a schematic flowchart of a transmission method according to an embodiment of the present application;
FIG. 2 is schematic structural diagram of a first communication device according to an embodiment of the present application; and
FIG. 3 is a schematic structural diagram of a transmission apparatus according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The following provides a clear and complete description of the solution in embodiments of the present application in conjunction with the accompanying drawings. The described embodiments are only a part of the embodiments of the present application and not all of them. Based on the embodiments of the present application, all other embodiments obtained by those skilled in the art without creative effort are within the scope of protection of the present application.

Embodiments of the present application provide a transmission method and apparatus for reducing latency.

The method and apparatus are based on the same conception. Due to the similarity in the principle of problem-solving between the method and apparatus, the implementation of the apparatus and method may be referred to each other, and the repetition is not be repeated.

The solutions provided in embodiments of the present application may be applied in various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The following content is introduced first.
(1) physical uplink control channel (PUCCH)/physical uplink shared channel (PUSCH) transmission

In a communication system, for any hybrid automatic repeat request (HARQ) process identifier (ID) of a given scheduled cell, a user equipment (UE) (such as a terminal) does not expect to transmit a PUSCH that overlaps in time with another PUSCH.

In case that the PUCCH or PUSCH overlaps in time, it is necessary to select a channel for transmission, and the transmission of which physical channel may be determined based on uplink control information (UCI) information carried by the PUCCH. For example, in case that the PUCCH carrying a (positive) scheduling request (SR) overlaps with the PUSCH not carrying data, the PUSCH is dropped and the PUCCH carrying the SR is transmitted. In case that the PUCCH carries hybrid automatic repeat request acknowledge (HARQ-ACK) and/or channel state information (CSI), and conflicts with resources for PUSCH, the UCI carried by the PUCCH may be multiplexed on the PUSCH for transmission to avoid collision between the PUCCH and the PUSCH.

### (2) UCI multiplexing in case of carrier aggregation (CA)

In a CA scenario, the UE may transmit the PUCCH on a specific carrier component (CC). If the PUCCH overlaps with multiple PUSCHs (which may be PUSCHs on other CCs) in time, the UE selects one PUSCH for UCI transmission or multiplexing based on the following rules.

Rule 1: if the multiple PUSCHs include a PUSCH used for transmitting aperiodic channel state information (A-CSI), the UCI is transmitted on that PUSCH.

Rule 2: if there are both PUSCH with corresponding physical downlink control channel (PDCCH) and PUSCH without corresponding PDCCH in the multiple PUSCHs, the PUSCH with corresponding PDCCH is selected for transmission.

Rule 3: if there are still multiple PUSCHs after Rule 2, the PUSCH transmitted on the carrier or cell with a smaller serial number is selected based on a numbering order of the carriers or cells where PUSCHs locate.

Rule 4: if there are multiple time division multiplexing (TDM) PUSCHs conflicting with a same PUCCH on the carrier selected based on the Rule 3, the PUSCH with an earliest starting transmission symbol is selected to transmit UCI.

### (3) Background technology for simultaneous uplink transmission

In case that multiple transmit/receive points (TRPs) are configured on the network side, two antenna panels of the terminal may be scheduled for simultaneous transmission through single downlink control information (S-DCI) or multiple downlink control information (M-DCI). Simultaneous transmission includes the following forms:
S-DCI: PUSCH repetition or simultaneous transmission based on space division multiplexing (SDM) (including single frequency network (SFN)) or frequency division multiplexing (FDM), and PUCCH repetition or simultaneous transmission based on FDM or SFN; and
M-DCI: two TRPs separately schedule two panels for PUSCH or PUCCH transmission. The PUSCHs transmitted from the two panels may carry different data or content, and the PUCCHs transmitted from the two panels may also carry different UCI.

In case that simultaneous uplink transmission of PUCCH/PUSCH is supported, the following problems are confronted in related art:
in case of M-DCI scheduling, each TRP separately schedules, and if two TRPs schedule PUCCH transmission and PUSCH transmission separately, or if one panel transmits PUCCH and another panel transmits PUSCH based on a UCI multiplexing condition, it may result in simultaneous transmission of PUCCH and PUSCH. However, in the related art, it is not supported for terminals to transmit both PUCCH and PUSCH simultaneously. How to avoid simultaneous transmission of PUCCH and PUSCH is a problem.

In the CA scenario, it is unclear on which PUSCH or PUSCHs the UCI is multiplexed for transmission. If the positions for UCI transmission determined by the network side and UE are inconsistent, it results in the network side being unable to correctly resolve the UCI.

The present application provides a method for simultaneous uplink transmission that allows simultaneous scheduling of UCI and data while avoiding transmission exceeding terminal capabilities (such as avoiding simultaneous transmission of PUCCH and PUSCH ).

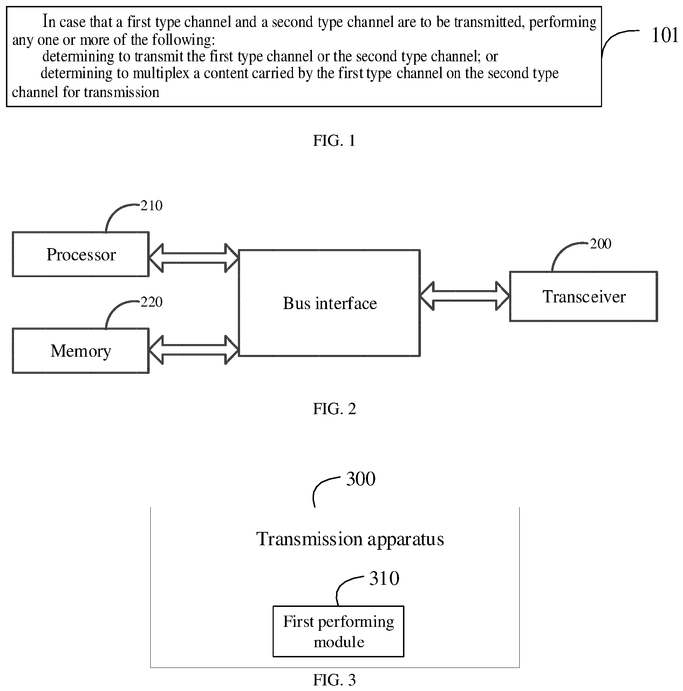

FIG. 1 is a schematic flowchart of a transmission method according to an embodiment of the present application. As shown in FIG. 1, embodiments of the present application provide a transmission method, which may be performed by a terminal, such as a mobile phone, etc. The method includes:
step 101: in case that a first type channel and a second type channel are to be transmitted, performing any one or more of the following:
determining to transmit the first type channel or the second type channel; or
determining to multiplex a content carried by the first type channel in the second type channel for transmission.

In an embodiment, the first type channel to be transmitted may be a PUCCH.

In an embodiment, the second type channel to be transmitted may be a PUSCH.

In an embodiment, the first type channel to be transmitted may be a physical sidelink control channel (PSCCH).

In an embodiment, the second type channel to be transmitted may be a physical sidelink shared channel (PSSCH).

In an embodiment, in case that the first type channel and the second type channel are to be transmitted, the first type channel may be transmitted and the second type channel may be dropped to avoid simultaneous transmission of PUCCH and PUSCH.

In an embodiment, in case that the first type channel and the second type channel are to be transmitted, the second type channel may be transmitted and the first type channel may be dropped to avoid simultaneous transmission of PUCCH and PUSCH.

In an embodiment, in case that the first type channel and the second type channel are to be transmitted, the content carried by the first type channel may be multiplexed in the second type channel for transmission.

For example, to allow simultaneous scheduling or transmission of UCI and data, multiplexing is used to transmit the UCI and data on PUSCH, to avoid simultaneous transmission of PUCCH and PUSCH.

The present application provides a method for simultaneous uplink transmission that allows simultaneous scheduling or transmission of UCI and data, and avoids simultaneous transmission of PUCCH and PUSCH.

In the transmission method provided in embodiments of the present application, in case that the first type channel and the second type channel are to be transmitted, it is determined to transmit the first type channel or the second type channel, or determined to multiplex the content carried by the first type channel in the second type channel for transmission, which effectively avoids the increased latency of the communication system due to the lack of support for simultaneous transmission of PUCCH and PUSCH, and effectively reduces the latency.

In an embodiment, determining to transmit the first type channel or the second type channel includes any one of the following:
dropping the second type channel and/or transmitting the first type channel based on a predefined rule or pre-configured information;
dropping the first type channel and/or transmitting the second type channel based on a predefined rule or pre-configured information; or
based on a pre-defined or pre-configured first rule, determining to drop the first type channel or the second type channel, and/or transmitting the first type channel or the second type channel not being dropped.

In an embodiment, in case that the first type channel and the second type channel are to be transmitted, the first type channel may be directly transmitted by default, and/or the second type channel may be dropped by default, to avoid simultaneous transmission of PUCCH and PUSCH.

In an embodiment, in case that the first type channel and the second type channel are to be transmitted, the second type channel may be directly transmitted by default, and/or the first type channel may be dropped by default, to avoid simultaneous transmission of PUCCH and PUSCH.

In an embodiment, in case that the first type channel and the second type channel are to be transmitted, the protocol may specify to transmit the first type channel, and/or the protocol may specify to drop the second type channel, to avoid simultaneous transmission of PUCCH and PUSCH.

In an embodiment, in case that the first type channel and the second type channel are to be transmitted, the protocol may specify to transmit the second type channel, and/or the protocol may specify to drop the first type channel, to avoid simultaneous transmission of PUCCH and PUSCH.

In an embodiment, in case that the first type channel and the second type channel are to be transmitted, the first type channel may be pre-set or configured to be transmitted, and/or the second type channel may be pre-set or configured to be dropped, to avoid simultaneous transmission of PUCCH and PUSCH.

In an embodiment, in case that the first type channel and the second type channel are to be transmitted, the second type channel may be pre-set or configured to be transmitted, and/or the first type channel may be pre-set or configured to be dropped, to avoid simultaneous transmission of PUCCH and PUSCH.

In an embodiment, in case that the first type channel and the second type channel are to be transmitted, it may be determined to transmit the first type channel and/or drop the second type channel based on a pre-set or protocol pre-defined or default rule, to avoid simultaneous transmission of PUCCH and PUSCH.

In an embodiment, in case that the first type channel and the second type channel are to be transmitted, it may be determined to transmit the second type channel and/or drop the first type channel based on a pre-set or protocol pre-defined or default rule, to avoid simultaneous transmission of PUCCH and PUSCH.

In an embodiment, in case that the first type channel and the second type channel are to be transmitted, it may be determined to transmit the first type channel and/or drop the second type channel based on the first rule, to avoid simultaneous transmission of PUCCH and PUSCH.

In an embodiment, in case that the first type channel and the second type channel are to be transmitted, it may be determined to transmit the second type channel and/or drop the first type channel based on the first rule, to avoid simultaneous transmission of PUCCH and PUSCH.

In an embodiment, the first rule may be pre-set or protocol pre-defined or default, or indicated by a communication peer or network side.

For example, the terminal may determine to drop the PUCCH or PUSCH based on a certain condition or a criterion. If the determined channel for transmission still contains two types of channels based on one condition or criterion, other conditions or criteria need to be used until the determined channel for transmission contains one type channel.

In an embodiment, in case of determining to drop a certain channel, channels of the same channel type as that channel may also be dropped.

In an embodiment, in case of determining to transmit a certain channel, channels of the same channel type as that channel may also be transmitted.

In an embodiment, determining to drop the first type channel or the second type channel based on the pre-defined or pre-configured first rule includes:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
   the priority corresponding to the first type channel is a priority corresponding to the content carried by the first type channel; the priority corresponding to the second type channel is a priority corresponding to a content carried by the second type channel;
   the priority corresponding to the first type channel is a priority of the first type channel; the priority corresponding to the second type channel is a priority of the second type channel; or
   the priority corresponding to the first type channel is a priority corresponding to a transmission scheme of the first type channel; the priority corresponding to the second type channel is a priority corresponding to a transmission scheme of the second type channel.

In an embodiment, the channel corresponding to the lowest priority may be determined and dropped based on the priority corresponding to the first type channel and the priority corresponding to the second type channel.

In an embodiment, the first communication device may determine to drop the first type channel or the second type channel based on the content carried by the first type channel and/or the second type channel.

For example, the terminal may determine to drop the PUCCH or PUSCH based on the content carried by the PUCCH or PUSCH.

That is, the priority corresponding to the first type channel may be determined based on the priority corresponding to the content carried by the first type channel, and the priority corresponding to the second type channel may be determined based on the priority corresponding to the content carried by the second type channel.

The terminal may determine to drop the PUCCH or PUSCH based on the content carried by the PUCCH or PUSCH.

For example, a certain priority order of the carried content is set, such as data (PUSCH) > positive SR > A-CSI (PUSCH) > HARQ-ACK, etc. In case that a physical channel carries multiple contents, it may be determined to drop which channel based on one of the carried contents (such as the content with the highest priority or the content with the lowest priority).

In an embodiment, for positive SR, if the UE has a scheduling request (SR scheduling request, SR) to transmit, the physical layer is needed to transmit SR/PUCCH.

For example, PUSCH carries data and A-CSI, and PUCCH includes, after multiplexing multiple types of UCI, SR and HARQ-ACK. The content with the highest priority on PUSCH is data, and the content with the highest priority on PUCCH is SR. Based on this, it may be determined that PUSCH has a higher priority. Therefore, PUSCH is transmitted and PUCCH is dropped.

For example, PUSCH transmits A-CSI, while PUCCH transmits SR. Based on this, it may be determined that PUCCH has a higher priority. Therefore, PUCCH is transmitted and PUSCH is dropped. In addition, other priority orders of the carried content may also be used, and the terminal determines whether to drop PUSCH or PUCCH based on these orders.

For example, TRP 1 schedules PUCCH and PUSCH, and TRP 2 schedules PUSCH. The priorities of contents carried by PUCCH and all PUSCHs (PUSCHs of two TRPs) may be compared to determine to drop PUCCH or PUSCH; or the priorities of contents carried by PUSCH and PUCCH within each TRP may be compared, and the priorities of contents carried by PUCCH and PUSCH between TRPs are then compared to determine which physical channel may be transmitted.

In an embodiment, the first communication device may determine to drop the first type channel or the second type channel based on the priority corresponding to the first type channel itself and the priority corresponding to the second type channel itself.

That is, the priority corresponding to the first type channel may be determined based on the priority corresponding to the first type channel itself, and the priority corresponding to the second type channel may be determined based on the priority corresponding to the second type channel itself.

For example, the terminal may determine a channel with the lowest priority based on the priority index of PUCCH or PUSCH, and drop the channel with the lowest priority.

In an embodiment, the terminal may determine to drop a physical channel with the low priority based on the priority index (0 or 1) associated with the PUCCH or PUSCH.

Similarly, priority comparison may be performed on all physical channels scheduled by the network side to select the physical channel with the highest priority for transmission. In addition, physical channels with the same channel type as the physical channel with the highest priority may also be transmitted.

For example, TRP 1 schedules PUCCH1 (priority index 1) and PUSCH 1 (priority index 0), and TRP 2 schedules PUCCH2 (priority index 0) and PUSCH2 (priority index 0). Therefore, the terminal may determine that PUCCH1 has the highest priority and PUCCH1 may be transmitted. Due to the support for PUCCH+PUCCH transmission, the PUCCH scheduled by TRP 2 may also be transmitted.

In an embodiment, the channels with the highest priority indexes (or lowest priority indexes) in the PUCCHs or PUSCHs may be compared to determine which physical channel may be transmitted. For example, it is assumed that TRP 1 schedules PUCCH1 (priority index 1) and PUSCH1 (priority index 0), and TRP 2 schedules PUCCH2 (priority index 0) and PUSCH2 (priority index 0), where PUSCH1 and PUSCH2 have the same priority index (priority index 0), and the PUCCH with a higher index in PUCCH1 and PUCCH2 is PUCCH1 (priority index 1), the priority indexes of PUCCH1 and PUSCH1 (or PUSCH2) may be compared to determine that PUCCH1 has the higher priority and may be transmitted, while PUSCH1 cannot be transmitted. Similarly, for terminals with simultaneous transmission capability of PUCCH, they may also transmit PUCCH1 and PUCCH2.

In an embodiment, priority comparison may be performed on the physical channels scheduled by each TRP first. If the two TRPs want to transmit the same type of physical channel after priority comparison, both may be transmitted; if the types of the physical channels that two TRPs want to transmit are different, the physical channels are continued to be compared through priority indexes to determine the final physical channel that may be transmitted.

In an embodiment, the first communication device may determine to drop the first type channel or the second type channel based on the transmission scheme corresponding to the first type channel and/or the second type channel, respectively.

For example, the terminal determines to drop PUCCH or PUSCH based on the transmission scheme.

That is, the priority corresponding to the first type channel may be determined based on the priority corresponding to the transmission scheme of the first type channel, and the priority corresponding to the second type channel may be determined based on the priority corresponding to the transmission scheme of the second type channel.

For example, physical channels configured for repetition or simultaneous transmission have higher priority. For example, FDM or SDM based repetition > TDM based repetition > FDM or SDM based simultaneous transmission > single transmission, etc.

In an embodiment, the terminal may determine to drop PUCCH or PUSCH based on the transmission scheme.

For example, physical channels configured for repetition or simultaneous transmission have higher priority. Repetition may be a TDM based repetition, or a FDM or SDM based repetition, and simultaneous transmission may be a PUCCH/PUSCH simultaneous transmission scheme scheduled by the same TRP or a control resource set (CORESET) with the same *CORESETPoolIndex* value.

Similarly, all physical channel transmission schemes scheduled by the network side may be compared to select the physical channel with higher priority for transmission.

For example, TRP 1 schedules PUCCH1 (single transmission), TRP 2 schedules PUCCH2 (simultaneous transmission or repetition) and PUSCH2 (single transmission), from which the terminal may determine that PUCCH2 has the highest priority among all channels scheduled simultaneously and may be transmitted. Similarly, for terminals with simultaneous transmission capability of PUCCH, if the simultaneous transmission of PUCCH1 and PUCCH2 does not exceed the capability of the terminal, for example, PUCCH2 is a TDM based repetition, the terminal may also transmit PUCCH1 and PUCCH2.

In an embodiment, the terminal may compare a reference PUCCH or a reference PUSCH in the PUCCHs or PUSCHs to determine which physical channel may be transmitted. For example, it is assumed that TRP 1 schedules PUCCH1 (single transmission), TRP 2 schedules PUCCH2 (simultaneous transmission or repetition) and PUSCH2 (single transmission), where PUSCH2 (because there is only one PUSCH, PUSCH2 is used as a PUSCH reference) is transmitted in a single transmission mode. PUCCH1 and PUCCH2 may use a PUCCH with a higher transmission priority or a lower transmission priority as reference, such as PUCCH2 with higher transmission priority as a reference. By comparing the transmission schemes of PUSCH2 and PUCCH2, PUSCH cannot be transmitted. Similarly, for terminals with simultaneous transmission capability of PUCCH, if the simultaneous transmission of PUCCH1 and PUCCH2 does not exceed the capability of the terminal, the terminal may also transmit PUCCH1 and PUCCH2.

In an embodiment, the terminal may first compare the transmission priorities of the physical channels scheduled by each TRP. If the two TRPs want to transmit the same type of physical channel after priority comparison, both may be transmitted; if the types of the physical channels that two TRPs want to transmit are different, the physical channels are continued to be compared through transmission priorities until the channels that may be transmitted and determined based on the rule have one type, and the final physical channel that may be transmitted is determined.

The present application does not limit the priority order of transmission schemes, and there may be other priorities. For example, FDM or SDM based repetition > TDM based repetition > FDM or SDM based simultaneous transmission > single transmission, etc.

If, after a comparison, different types of physical channels have the same priority, or the physical channels determined based on the transmission scheme priority still include PUCCH and PUSCH, other methods may be used to determine to drop which physical channel, such as determining to drop which physical channel based on the priority of the content carried by the physical channel, priority index, *CORESETPoolIndex* value, etc.

In an embodiment, the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

In an embodiment, the channel to be dropped may be determined based on one of the contents carried by the physical channel (such as the content with the highest priority or the content with the lowest priority).

For example, the channel corresponding to the highest priority among priorities corresponding to all the contents carried by the first type channel is compared with the channel corresponding to the highest priority among priorities corresponding to all the contents carried by the second type channel, and a channel corresponding to the lowest priority is determined to be dropped.

For example, the channel corresponding to the lowest priority among priorities corresponding to all the contents carried by the first type channel is compared with the channel corresponding to the lowest priority among priorities corresponding to all the contents carried by the second type channel, and a channel corresponding to the lowest priority is determined to be dropped.

For example, the channel corresponding to the highest priority among priorities corresponding to all the contents carried by the first reference channel in the first type channel is compared with the channel corresponding to the highest priority among priorities corresponding to all the contents carried by the second reference channel in the second type channel, and a channel corresponding to the lowest priority is determined to be dropped.

For example, the channel corresponding to the lowest priority among priorities corresponding to all the contents carried by the first reference channel in the first type channel is compared with the channel corresponding to the lowest priority among priorities corresponding to all the contents carried by the second reference channel in the second type channel, and a channel corresponding to the lowest priority is determined to be dropped.

The reference channel may be a first type channel and/or a second type channel corresponding to a *CORESETPoolIndex* value of k (k=0 or 1); or the reference channel may be a first type channel and/or a second type channel corresponding to the n-th (n = 1, 2, 3, or 4, etc.) indicated TCI state; or the reference channel may be a first type channel and/or a second type channel with a lower resource block (RB) index.

In an embodiment, determining to drop the first type channel or the second type channel based on the pre-defined or pre-configured first rule includes any one or more of the following:
determining to drop a channel corresponding to a lowest priority between the first type channel and the second type channel;
determining to drop the first type channel or the second type channel based on a priority corresponding to transmission associated information, where the transmission associated information is information associated with the first type channel and/or the second type channel;
determining to drop a channel corresponding to a lowest priority between a first channel and a second channel, where the first channel is a channel corresponding to a highest priority among all the first type channels, and the second channel is a channel corresponding to a highest priority among all the second type channels;
determining to drop a channel corresponding to a lowest priority between a third channel and a fourth channel, where the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, where the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

In an embodiment, a channel corresponding to a lowest priority between the first type channel and the second type channel may be determined to be dropped.

In an embodiment, priority comparison may be performed on all physical channels scheduled by the network side, to select the physical channel with the highest priority for transmission. In addition, physical channels with the same channel type as the physical channel with the highest priority may also be transmitted.

In an embodiment, priority comparison may be performed on all physical channels scheduled by the network side, to select the physical channel with the lowest priority to drop. In addition, physical channels with the same channel type as the physical channel with the lowest priority may also be dropped.

In an embodiment, the first type channel or the second type channel may be determined to be dropped based on the priority corresponding to the transmission associated information, where the transmission associated information is information associated with the first type channel and/or the second type channel.

In an embodiment, priority comparison may be performed on the transmission associated information associated with all physical channels scheduled by the network side, to determine to drop the first type channel or the second type channel.

In an embodiment, the channels with the highest priority index (or lowest priority index) in the PUCCHs or PUSCHs may be compared to determine which physical channel may be transmitted.

In an embodiment, the channel corresponding to the highest priority in the first type channel may be determined as the first channel, and the channel corresponding to the highest priority in the second type channel may be determined as the second channel. The priority corresponding to the first channel may be compared with the priority corresponding to the second channel to determine to drop the channels with the channel type corresponding to a channel with the lowest priority between the first channel and the second channel.

For example, the channel corresponding to the highest priority in the first type channel may be determined as the first channel, and the channel corresponding to the highest priority in the second type channel may be determined as the second channel. If the priority corresponding to the first channel is higher than the priority corresponding to the second channel, the second type channel is determined to be dropped.

For example, the channel corresponding to the highest priority in the first type channel may be determined firstly as the first channel, and the channel corresponding to the lowest priority in the second type channel may be determined as the second channel. If the priority corresponding to the first channel is lower than the priority corresponding to the second channel, the first type channel is determined to be dropped.

In an embodiment, the channel corresponding to the lowest priority in the first type channel may be determined as the third channel, and the channel corresponding to the lowest priority in the second type channel may be determined as the fourth channel. The priority corresponding to the third channel may be compared with the priority corresponding to the fourth channel to determine to drop the channels with the channel type corresponding to a channel with the lowest priority between the first channel and the second channel.

For example, the channel corresponding to the lowest priority in the first type channel may be determined as the third channel, and the channel corresponding to the lowest priority in the second type channel may be determined as the fourth channel. If the priority corresponding to the third channel is higher than the priority corresponding to the fourth channel, the second type channel is determined to be dropped.

For example, the channel corresponding to the lowest priority in the first type channel may be determined as the third channel, and the channel corresponding to the lowest priority in the second type channel may be determined as the fourth channel. If the priority corresponding to the third channel is lower than the priority corresponding to the fourth channel, the first type channel is determined to be dropped.

For example, the reference PUCCH and reference PUSCH in the scheduled physical channels may be compared to determine which physical channel may be transmitted; the definition of the reference channel (including reference PUCCH or reference PUSCH) is as previously described.

The reference channel may be a first type channel and/or a second type channel corresponding to a *CORESETPoolIndex* value of k (k=0 or 1); or the reference channel may be a first type channel and/or a second type channel corresponding to the n-th (n = 1, 2, 3, or 4, etc.) indicated TCI state; or the reference channel may be a first type channel and/or a second type channel with a lower resource block (RB) index.

In an embodiment, the first reference channel in the first type channel may be determined, and the second reference channel in the second type channel may be determined. The priority corresponding to the first reference channel may be compared with the priority corresponding to the second reference channel, and the channel corresponding to the lowest priority may be determined to be dropped.

In an embodiment, the priority corresponding to each of all the first type channels is compared with the priority corresponding to each of all the second type channels in pairs until the channel corresponding to the lowest priority between the first type channel and the second type channel is determined, and the channel corresponding to the lowest priority may be determined to be dropped.

In an embodiment, the priority corresponding to the transmission associated information is a lowest priority or a highest priority among a priority corresponding to each of the first type channels and/or each of the second type channels associated with the transmission associated information, or
the priority corresponding to the transmission associated information is a lowest priority or a highest priority among a priority corresponding to each of the first reference channels in the first type channels and/or each of the second reference channels in the second type channels associated with the transmission associated information.

In an embodiment, priority comparison may be performed on the transmission associated information associated with all physical channels scheduled by the network side, and the channel associated with the transmission associated information of the highest priority may be selected for transmission. In addition, physical channels with the same channel type as the channel associated with the transmission associated information of the highest priority may also be transmitted.

In an embodiment, priority comparison may be performed on the transmission associated information associated with all physical channels scheduled by the network side. Firstly, the priority comparison within the transmission associated information may be conducted to determine the highest or lowest priority item (for example, comparing the priorities of the physical channels associated with the same transmission associated information, determining the channel corresponding to the highest or lowest priority, and the priority of the channel corresponding to the highest or lowest priority may be used as the priority corresponding to the associated transmission associated information). Then, the priorities among the transmission associated information may be compared (comparing the priorities corresponding to different transmission associated information), and the channel associated with the lowest priority item may be dropped.

In an embodiment, the transmission associated information may be one or more of a TRP, a *CORESETPoolIndex* parameter, a TCI state, etc.

For example, the priorities of the contents carried by PUSCH and PUCCH associated with one or more of the same TRP, *CORESETPoolIndex* parameter, TCI state, etc. may be compared, and then the channel associated with the TRP, *CORESETPoolIndex* parameter, TCI state, etc. (i.e., all TRP scheduled channels, i.e., all channels) corresponding to the lowest priority may be dropped.

In an embodiment, an order of the priority corresponding to the content carried by the first type channel and/or the priority corresponding to the content carried by the second type channel from high to low includes:
data, SR, A-CSI, and HARQ-ACK.

In an embodiment, the order of the priority corresponding to the contents carried by different channels may be: data (PUSCH) > (positive) SR > A-CSI (PUSCH) > HARQ-ACK, etc.; the above is only an example, and the embodiments of the present application does not limit the specific order.

In an embodiment, an order of the priority corresponding to the transmission scheme of the first type channel and/or the priority corresponding to the transmission scheme of the second type channel includes:
a priority corresponding to a first transmission scheme is higher than a priority corresponding to a single transmission, where the first transmission scheme includes any one or more of the following: frequency division multiplexing (FDM) based repetition or space division multiplexing (SDM) based repetition, time division multiplexing (TDM) based repetition, or FDM based simultaneous transmission or SDM based simultaneous transmission; or
a priority corresponding to a single transmission is higher than a priority corresponding to a second transmission scheme, where the second transmission scheme includes any one or more of the following: frequency division multiplexing (FDM) based repetition or space division multiplexing (SDM) based repetition, time division multiplexing (TDM) based repetition, or FDM based simultaneous transmission or SDM based simultaneous transmission; or
a priority corresponding to a single transmission is higher than a priority corresponding to a third transmission scheme, and the priority corresponding to the single transmission is lower than a priority corresponding to a fourth transmission scheme, where the third transmission scheme and the fourth transmission scheme include any one or more of the following:
   frequency division multiplexing (FDM) based repetition or space division multiplexing (SDM) based repetition, time division multiplexing (TDM) based repetition, or FDM based simultaneous transmission or SDM based simultaneous transmission.

In an embodiment, physical channels configured for repetition or simultaneous transmission have higher priority.

In an embodiment, the priority of a single transmission may be lower than one or more of FDM or SDM based repetition, TDM based repetition, or FDM or SDM based simultaneous transmission.

In an embodiment, the order of the priority among FDM or SDM based repetition, TDM based repetition, or FDM or SDM based simultaneous transmission may be determined based on the related art.

In an embodiment, the priority of a single transmission may be higher than one or more of FDM or SDM based repetition, TDM based repetition, or FDM or SDM based simultaneous transmission.

The priority of a single transmission may be higher than partial of FDM or SDM based repetition, TDM based repetition, or FDM or SDM based simultaneous transmission, and lower than another partial of FDM or SDM based repetition, TDM based repetition, or FDM or SDM based simultaneous transmission.

In an embodiment, physical channels configured for repetition or simultaneous transmission have higher priority. For example, FDM or SDM based repetition > TDM based repetition > FDM or SDM based simultaneous transmission > single transmission, etc.

In an embodiment, determining to drop the first type channel or the second type channel based on the pre-defined or pre-configured first rule includes:
determining to drop the first type channel or the second type channel based on a first value corresponding to the first type channel and a second value corresponding to the second type channel.

In an embodiment, it is determined to drop one of the first type channel and the second type channel that corresponds to a third value based on the first value corresponding to the first type channel and the second value corresponding to the second type channel. The first value corresponding to the first type channel is used to indicate the transmission associated information of the first type channel, and the second value corresponding to the second type channel is used to indicate the transmission associated information of the second type channel;
the third value is one of the first value and the second value, and the third value is pre-configured or predefined.

In an embodiment, if the PUCCH or PUSCH has the same priority, the terminal may determine to drop which physical channel based on other methods, such as determining to drop which physical channel based on the priority of the content carried by the PUCCH or PUSCH, the *CORESETPoolIndex* value, the transmission scheme, etc.

In an embodiment, the terminal may determine to drop the PUCCH or PUSCH based on the *CORESETPoolIndex* value, such as dropping the transmission of channels with a specific *CORESETPoolIndex* value.

In an embodiment, the terminal may transmit channels with a *CORESETPoolIndex* value of 0 (or without configuring the *CORESETPoolIndex* parameter) and drop channels with a *CORESETPoolIndex* value of 1.

In an embodiment, the terminal may compare the *CORESETPoolIndex* values of all physical channels scheduled by the network side and select the physical channel with a *CORESETPoolIndex* value of 0 for transmission.

For example, TRP 1 *(CORESETPoolIndex* value of 0) schedules PUCCH1, and TRP 2 *(CORESETPoolIndex* value of 1) schedules PUCCH2 and PUSCH2. Therefore, the terminal may determine that PUCCH1 has the highest priority and PUCCH1 may be transmitted.

In an embodiment, the terminal may compare one of the reference PUCCHs or reference PUSCHs to determine which physical channel may be transmitted.

For example, it is assumed that TRP 1 schedules PUCCH1 and TRP 2 schedules PUCCH2 and PUSCH2, where PUSCH2 (because there is only one PUSCH, PUSCH2 is used as a reference for PUSCH) corresponds to a *CORESETPoolIndex* value of 1, PUCCH1 or PUCCH2 with a smaller or a larger *CORESETPoolIndex* value may be used as a reference, such as PUCCH1 with the smaller *CORESETPoolIndex* value as the reference. The *CORESETPoolIndex* values of PUSCH2 and PUCCH1 determine that PUCCH may be transmitted and PUSCH cannot be transmitted. Similarly, for terminals with simultaneous transmission capability of PUCCH, they may also transmit PUCCH1 and PUCCH2.

In an embodiment, if the physical channel determined based on the *CORESETPoolIndex* value still includes PUCCH and PUSCH, other methods may be used to determine to drop which physical channel, such as determining to drop which physical channel based on the priority of the content carried by the physical channel, priority index, transmission scheme, etc.

For example, the terminal may determine to drop the PUCCH or PUSCH based on the *CORESETPoolIndex* value, such as dropping the transmission of channels with a specific *CORESETPoolIndex* value.

For example, all physical channels scheduled by the network side may be compared for *CORESETPoolIndex* values, and the physical channel with a *CORESETPoolIndex* value of 0 may be selected for transmission.

In an embodiment, a first value corresponding to the first type channel is a value of a third reference channel among all the first type channels, and a second value corresponding to the second type channel is a value of a fourth reference channel among all the second type channels.

For example, a reference channel, namely the third reference channel, in the first type channel may be determined, and a reference channel, namely the fourth reference channel, in the second type channel may be determined. Then, the value corresponding to the third reference channel may be compared with the value corresponding to the fourth reference channel to determine to drop the first type channel or the second type channel.

For example, the third reference channel and fourth reference channel may be determined for all the physical channels scheduled by the network side, and then the *CORESETPoolIndex* values of the third reference channel and fourth reference channel may be compared to select the physical channels with a *CORESETPoolIndex* value of 0 for transmission.

In an embodiment, dropping the second type channel and/or transmitting the first type channel includes:
dropping the second type channel and/or transmitting the first type channel before uplink control information (UCI) multiplexing; or
dropping the second type channel and/or transmitting the first type channel after uplink control information (UCI) multiplexing;
dropping the first type channel and/or transmitting the second type channel includes:
   dropping the first type channel and/or transmitting the second type channel before UCI multiplexing; or
   dropping the first type channel and/or transmitting the second type channel after UCI multiplexing.

In an embodiment, based on the protocol pre-defined rule or the protocol pre-definition or the pre-setting or the pre-configuration, it may be determined to drop the second type channel and only transmit the first type channel before UCI multiplexing.

In an embodiment, based on the protocol pre-defined rule or the protocol pre-definition or the pre-setting or the pre-configuration, it may be determined to drop the second type channel and only transmit the first type channel after UCI multiplexing.

In an embodiment, based on the protocol pre-defined rule or the protocol pre-definition or the pre-setting or the pre-configuration, it may be determined to drop the first type channel and only transmit the second type channel before UCI multiplexing.

In an embodiment, based on the protocol pre-defined rule or the protocol pre-definition or the pre-setting or the pre-configuration, it may be determined to drop the first type channel and only transmit the second type channel after UCI multiplexing.

In an embodiment, based on the first rule, it is determined to drop one of the first channel and the second channel before or after UCI multiplexing, and transmit the other channel not being dropped in the first channel and the second channel. The first rule is predefined or pre-set.

For example, before UCI multiplexing, the terminal may determine to drop PUCCH or PUSCH.

In an embodiment, it may be determined to drop all PUCCHs or all PUSCHs.

For example, after UCI multiplexing, the terminal may determine to drop PUCCH or PUSCH.

For example, before UCI multiplexing, the terminal may determine to drop PUCCH or PUSCH based on a certain condition or a criterion.

In an embodiment, if the determined channel for transmission based on one condition or criterion still contains two types of channels, other conditions or criteria need to be used until the determined channel for transmission contains one type channel.

The terminal drops PUSCH and performs PUCCH transmission to ensure the correct transmission of control information (such as HARQ-ACK).

For example, in case that TRP 1 schedules PUCCH transmission and TRP 2 schedules PUSCH transmission, to ensure a correct UCI transmission, the PUSCH transmission of TRP 2 is dropped; for example, TRP 1 schedules PUCCH transmission, TRP 2 schedules the PUCCH and PUSCH transmission, and similarly, to ensure a correct UCI transmission, the PUSCH transmission of TRP 2 is dropped. At this point, it is not necessary to consider the multiplexing between the PUCCH and PUSCH scheduled by TRP 2, nor is it necessary to consider the multiplexing between all channels transmitted by the terminal.

In the embodiments of the present application, it may be determined to drop which channel before UCI multiplexing, which avoids the introduction of overly complex transmission methods.

In an embodiment, the terminal may drop the PUCCH and perform PUSCH transmission to ensure a correct data transmission.

For example, after UCI multiplexing, the terminal may determine to drop PUCCH or PUSCH based on a certain condition or a criterion.

For example, TRP 1 schedules the PUCCH and PUSCH, and TRP 2 schedules the PUCCH and PUSCH. After the UCI multiplexing, both TRP 1 and TRP 2 only need to transmit PUSCH, that is, there is no need for simultaneous transmission of PUCCH+PUSCH, and there is no need to drop physical channel. The beneficial effect is that both control information and data may be transmitted.

For example, TRP 1 schedules the PUCCH and PUSCH, TRP 2 schedules the PUCCH, and after the UCI multiplexing, TRP 1 wants the terminal to perform PUSCH transmission, and TRP 2 wants the terminal to perform PUCCH transmission. In this case, based on the predetermined drop criteria, the terminal drops the PUCCH transmission, that is, only the PUSCH transmission scheduled by TRP 1 is performed. At this point, the UCI information scheduled by TRP 1 is multiplexed on the PUSCH.

In the embodiments of the present application, it is assumed that the terminal performs UCI multiplexing between the PUCCH and PUSCH transmitted by each TRP, or other UCI multiplexing may also be used. After completing UCI multiplexing, it is determined whether to drop PUCCH or PUSCH. The beneficial effect of this scheme is that the terminal may transmit as many PUCCH or PUSCH as possible.

For example, the terminal may determine to drop the PUCCH or PUSCH based on the content carried by the PUCCH or PUSCH.

For example, the terminal may determine to drop the PUCCH or PUSCH based on the priority index of the PUCCH or PUSCH, and drop channels with lower priority.

For example, the terminal may determine to drop the PUCCH or PUSCH based on the *CORESETPoolIndex* value, such as dropping the transmission of channels with a specific *CORESETPoolIndex* value.

For example, the terminal may determine to drop PUCCH or PUSCH based on the transmission scheme.

In an embodiment, determining to multiplex the content carried by the first type channel in the second type channel for transmission includes:
in case of presence of the first type channel and the second type channel, multiplexing the content carried by the first type channel in the second type channel.

In an embodiment, the first multiplexing may be performed for the first type channel and the second type channel associated with the same transmission associated information; in case that the first type channel and the second type channel still exist after multiplexing, the content carried by the first type channel is multiplexed in the second type channel (second multiplexing).

In an embodiment, the first multiplexing is multiplexing for channels associated with the same transmission associated information (multiplexing within the transmission associated information). After multiplexing, if the transmission associated information is only associated with the second type channel (the first type channel is multiplexed on the associated second type channel), the second type channel may be directly transmitted; if the following situation exists, a certain transmission associated information is originally only associated with the first type channel, therefore it cannot be multiplexed in the second type channel during the first multiplexing. Therefore, there is still a situation where the first type channel and the second type channel exist after the first multiplexing. Another multiplexing (multiplexing between transmission associated information) is performed, and the content carried by the first type channel is multiplexed in the second type channel among all current physical channels, regardless of whether they are associated with the same channel associated information or different associated information.

For example, UCI multiplexing may be performed based on the method of simultaneous transmission of UCI. If there is still a simultaneous transmission of PUCCH and PUSCH, the UCI carried by PUCCH may be multiplexed on PUSCH for transmission (performing two times of UCI multiplexing, per-TRP UCI multiplexing+inter-TRP UCI multiplexing).

For example, UCI multiplexing is performed within a physical channel associated with a TRP or a panel based on the resource block (RB) index, TCI state, overlapping situation, etc. of the physical channel. At this point, UCI multiplexing between TRPs or panels is not involved. If there is still a simultaneous transmission of PUCCH and PUSCH, another UCI multiplexing is performed, such as UCI multiplexing between TRPs, and the UCI carried by PUCCH is multiplexed on PUSCH to avoid the occurrence of simultaneous transmission of PUCCH and PUSCH.

For example, UCI multiplexing may be performed based on the method of simultaneous transmission of UCI. If there is still a simultaneous transmission of PUCCH and PUSCH, and if PUSCH still meets the UCI multiplexing condition, the UCI carried by PUCCH may also be multiplexed on PUSCH for transmission; if PUSCH does not meet the UCI multiplexing condition, PUCCH or PUSCH is dropped through at least one method or step provided in various embodiments of the present application.

In an embodiment, a UCI multiplexing method is defined to ensure that all UCI carried by the PUCCH are multiplexed on the PUSCH for transmission (performing one time of UCI multiplexing, joint UCI multiplexing within and between TRPs).

In an embodiment, determining to multiplex the content carried by the first type channel in the second type channel for transmission includes:
determining a target channel in the second type channel; and
determining to multiplex the content carried by the first type channel on the target channel for transmission.

In an embodiment, the first communication device may first determine on which specific second type channel to multiplex the content carried by the first type channel, which may be referred to as the target channel, and then the content carried by the first type channel is multiplexed on the target channel for transmission.

In an embodiment, the first communication device and the communication peer (such as a base station or another terminal) may have a common understanding of on which specific second type channel to multiplex the content carried by the first type channel for transmission, and the communication peer may demodulate the content carried by the first type channel at a correct location.

For example, gNB and UE may have a common understanding of on which PUSCH UCI is multiplexed for transmission, which facilitates gNB to decode UCI at the correct location.

In an embodiment, determining the target channel in the second type channel includes:
determining the target channel as a channel corresponding to a highest priority among all the second type channels

In an embodiment, the second type channel with the highest priority may be determined, and the content carried by the first type channel may be multiplexed in the second type channel with higher priority.

In an embodiment, the method further includes:
determining the target channel based on a first order, where the first order includes any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times; or
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission.

The target channel is determined based on the first order, where the first order includes any one or more of the following:
channel for transmitting A-CSI, channel dynamically scheduled or scheduled by configured grant, channel corresponding to a first CC index, channel for simultaneous transmission, and each of channels corresponding to different transmission times from early to late; or
channel for transmitting A-CSI, channel dynamically scheduled or scheduled by configured grant, channel for simultaneous transmission, channel corresponding to a first CC index, and each of channels corresponding to different transmission times from early to late; or
channel for transmitting A-CSI, channel dynamically scheduled or scheduled by configured grant, channel corresponding to a first CC index, each of channels corresponding to different transmission times from early to late, and channel for simultaneous transmission;
the first CC index is a smallest index, or a predefined index, or a largest index among all CC indexes.

In an embodiment, the first CC index may also be regarded as a first cell index.

For example, the terminal may determine on which PUSCH to multiplex UCI based on whether A-CSI is transmitted, dynamic scheduling or configured grant scheduling, CC index, simultaneous PUSCH transmission, and the order of PUSCH transmission times. Simultaneous PUSCH transmission has lower priority compared to CC index and higher priority compared to the order of PUSCH transmission times.

In an embodiment, in case that the UE transmits more than one PUSCHs over a slot on a CC or cell with a minimum *ServCellIndex* value or minimum cell index, and all the PUSCHs meet the UCI multiplexing condition, and if the slot contains simultaneous PUSCH transmission (such as PUSCH FDM, SDM, SFN transmission, etc.), the UE multiplexes the UCI in one transmission occasion, repetition, layer group, or on one PUSCH of the simultaneously transmitted PUSCH.

For example, the terminal may determine on which PUSCH to multiplex UCI based on whether A-CSI is transmitted, dynamic scheduling or configured grant scheduling, simultaneous PUSCH transmission, CC index, and the order of PUSCH transmission times. Simultaneous PUSCH transmission has a higher priority compared to CC index.

If the terminal determines multiple PUSCHs based on the Rule 1 and Rule 2 (see above for background technologies), and multiple PUSCHs include PUSCHs for simultaneous transmission, the UE selects one or more PUSCHs with smaller CC indexes among them for transmission.

For example, PUSCH1 and PUSCH2 on CC1 are transmitted simultaneously, PUSCH3 and PUSCH4 on CC2 are transmitted simultaneously, and PUSCH5 is transmitted on CC3. It is assumed that the indexes of the three CCs are CC1>CC2>CC3 with the lowest index, one of PUSCH3 or PUSCH4 transmitted simultaneously on CC2 is selected for transmission.

For example, multiple CCs have simultaneous transmissions, such as PUSCH1 and PUSCH2 on CC1, PUSCH3 and PUSCH4 on CC2, and PUSCH5 on CC3. It is assumed that CC3 has the lowest index, priority is given to selecting the target channel from CC1 and CC2, which have simultaneous transmissions.

For example, the terminal may determine on which PUSCH to multiplex the UCI based on whether to transmit A-CSI, dynamic scheduling or configured grant scheduling, CC index, the order of PUSCH transmission times, and simultaneous PUSCH transmission. Simultaneous PUSCH transmission has lower priority compared to the order of PUSCH transmission times.

For example, UE may determine a PUSCH based on whether to transmit A-CSI, dynamic scheduling or configured grant scheduling, CC index, and the order of PUSCH transmissions. If the PUSCH adopts simultaneous transmission, UCI may be multiplexed in one or more PUSCHs for transmission based on parameters such as RB index, TCI state, overlapping situation, *CORESETPoolIndex,* etc. of the physical channel.

In an embodiment, determining to multiplex the content carried by the first type channel in the second type channel for transmission includes any one or more of the following:
transmitting multiple second type channels over a time unit of a CC with the first CC index, and in case that the time unit contains simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels; or
determining one or more second type channels based on a transmission time of the first type channel and/or the second type channel, and in case that the one or more second type channels include a simultaneous transmission, multiplexing the first type channel in one or more simultaneously transmitted second type channels for transmission.

In case that the channel determined based on the channel corresponding to different transmission times from early to late contains simultaneous transmission, the first type channel is multiplexed in one or more simultaneously transmitted second type channels for transmission.

In an embodiment, if the UE transmits more than one PUSCHs over a slot on the CC with the minimum *ServCellIndex* value, and all PUSCHs meet the UCI multiplexing condition, and if the slot contains simultaneous PUSCH transmission (such as PUSCH FDM, SDM, SFN transmission, etc.), the UE multiplexes the UCI in one transmission occasion, repetition, layer group, or on one PUSCH (i.e., as the target channel) of the simultaneously transmitted PUSCH (i.e., as the target channel).

In an embodiment, there may still be multiple PUSCHs after determination based on whether to transmit A-CSI, dynamic scheduling or configured grant scheduling. If there is a CC that includes simultaneous transmission, the PUSCH with the lowest index (i.e., as the target channel) among the PUSCHs transmitted simultaneously may be selected for multiplexing.

In an embodiment, PUCCH may be multiplexed in one or more PUSCHs, and the embodiments of the present application do not limit this.

In an embodiment, after determining the PUSCH based on the order of PUSCH transmissions, if the PUSCH adopts simultaneous transmission (such as two PUSCHs starting at the same time), the UCI may be multiplexed in one or more PUSCHs (i.e., as the target channel) for transmission based on parameters such as the RB index, TCI state, overlapping situation, and *CORESETPoolIndex,* etc. of the physical channel.

In the transmission method provided in embodiments of the present application, in case that the first type channel and the second type channel are to be transmitted, it is determined to transmit the first type channel or the second type channel, or determined to multiplex the content carried by the first type channel in the second type channel for transmission, which effectively avoids the increased latency of the communication system due to the lack of support for simultaneous transmission of PUCCH and PUSCH, and effectively reduces the latency.

In an embodiment, taking the first type channel as PUCCH and the second type channel as PUSCH for example, in case of M-DCI scheduling, each TRP separately schedules. If two TRPs schedule PUCCH transmission and PUSCH transmission separately, or if one panel transmits PUCCH and another panel transmits PUSCH based on the UCI multiplexing condition, there may be a simultaneous transmission of PUCCH and PUSCH. For S-DCI scheduling, if one TRP schedules the PUCCH and PUSCH transmission, and another TRP schedules the PUSCH transmission, after UCI multiplexing, there may also be a simultaneous transmission of PUCCH and PUSCH. To avoid simultaneous transmission of PUCCH and PUSCH by the terminal, at least one of the following methods may be used.

Method 1: the terminal determines to drop the PUCCH or PUSCH before UCI multiplexing.

The terminal drops PUSCH and performs PUCCH transmission to ensure the correct transmission of control information (such as HARQ-ACK).

For example, in case that TRP 1 schedules PUCCH transmission and TRP 2 schedules PUSCH transmission, to ensure a correct UCI transmission, the PUSCH transmission of TRP 2 is dropped; for example, TRP 1 schedules PUCCH transmission, TRP 2 schedules the PUCCH and PUSCH transmission, and similarly, to ensure a correct UCI transmission, the PUSCH transmission of TRP 2 is dropped. At this point, it is not necessary to consider the multiplexing between the PUCCH and PUSCH scheduled by TRP 2, nor is it necessary to consider the multiplexing between all channels transmitted by the terminal. In case of dropping, all PUCCHs or all PUSCHs are dropped. For example, it is determined to drop PUCCH or PUSCH on symbols where PUSCH and PUCCH overlap. If the PUCCH or PUSCH is dropped before multiplexing and overlap is caused between the PUCCH and PUSCH after UCI multiplexing, Method 2 may be further used to determine to drop or transmit which channel. Other methods are also similar. If the channels determined by one method still have two types, or if after using one method, UCI multiplexing results in simultaneous transmission of PUCCH and PUSCH, other methods may be used for further processing.

The embodiments of the present application may determine to drop which channel before UCI multiplexing, which avoids the introduction of overly complex transmission methods.

In an embodiment, the terminal may drop the PUCCH and perform PUSCH transmission to ensure a correct data transmission.

Similarly, before UCI multiplexing, the terminal drops PUCCHs scheduled by one or two TRPs and only transmits PUSCH.

Method 2: the terminal determines to drop the PUCCH or PUSCH after UCI multiplexing.

Similar to Method 1, the difference is that the terminal first performs the UCI multiplexing and then determines whether to drop the PUCCH or PUSCH.

For example, TRP 1 schedules the PUCCH and PUSCH, and TRP 2 schedules the PUCCH and PUSCH. After the UCI multiplexing, both TRP 1 and TRP 2 only need to transmit PUSCH, that is, there is no need for simultaneous transmission of PUCCH+PUSCH, and there is no need to drop physical channel. The beneficial effect is that both control information and data may be transmitted.

For example, TRP 1 schedules the PUCCH and PUSCH, TRP 2 schedules the PUCCH, and after the UCI multiplexing, TRP 1 wants the terminal to perform PUSCH transmission, and TRP 2 wants the terminal to perform PUCCH transmission. In this case, based on the predetermined drop criteria, the terminal drops the PUCCH transmission, that is, only the PUSCH transmission scheduled by TRP 1 is performed. At this point, the UCI information scheduled by TRP 1 is multiplexed on the PUSCH.

In the embodiment of the present application, it is assumed that the terminal performs UCI multiplexing between the PUCCH and PUSCH transmitted by each TRP, or other UCI multiplexing methods may also be used. After completing UCI multiplexing, it is determined whether to drop PUCCH or PUSCH. The beneficial effect of this scheme is that the terminal may transmit as many PUCCH or PUSCH as possible.

Method 3: the terminal determines to drop the PUCCH or PUSCH based on a certain condition or a criterion before UCI multiplexing.

The terminal may determine to drop the PUCCH or PUSCH based on the content carried by the PUCCH or PUSCH.

For example, a certain priority order of the carried content is set, such as data (PUSCH) > positive SR > A-CSI (PUSCH) > HARQ-ACK, etc. In case that a physical channel carries multiple contents, it may be determined to drop which channel based on one of the carried contents (such as the content with the highest priority or the content with the lowest priority). Positive SR refers to a situation where SR is actually transmitted.

For example, PUSCH carries data and A-CSI, and PUCCH includes, after multiplexing multiple types of UCI, SR and HARQ-ACK. The content with the highest priority in PUSCH is data, and the content with the highest priority in PUCCH is SR. Based on this, it may be determined that PUSCH has a higher priority. Therefore, PUSCH is transmitted and PUCCH is dropped.

For example, PUSCH transmits A-CSI, while PUCCH transmits SR. Based on this, it may be determined that PUCCH has a higher priority. Therefore, PUCCH is transmitted and PUSCH is dropped. In addition, other priority orders of the carried content may also be used, and the terminal determines whether to drop PUSCH or PUCCH based on these orders.

For example, TRP 1 schedules PUCCH and PUSCH, and TRP 2 schedules PUSCH. The priorities of contents carried in PUCCH and all PUSCHs (PUSCHs of two TRPs) may be compared to determine to drop PUCCH or PUSCH; or the priorities of contents carried by PUSCH and PUCCH within each TRP may be compared, and the priorities of contents carried by PUCCH and PUSCH between TRPs are then compared to determine which physical channel may be transmitted.

In an embodiment, the terminal may determine to drop the PUCCH or PUSCH based on the priority index of the PUCCH or PUSCH, and drop channels with lower priority.

In an embodiment, the terminal may determine to drop a physical channel with the low priority based on the priority index (0 or 1) associated with the PUCCH or PUSCH.

Similarly, priority comparison may be performed on all physical channels scheduled by the network side to select the physical channel with the highest priority for transmission. In addition, physical channels with the same channel type as the physical channel with the highest priority may also be transmitted.

For example, TRP 1 schedules PUCCH1 (priority index 1) and PUSCH 1 (priority index 0), and TRP 2 schedules PUCCH2 (priority index 0) and PUSCH2 (priority index 0). Therefore, the terminal may determine that PUCCH1 has the highest priority and may be transmitted. Due to the support for PUCCH+PUCCH transmission, the PUCCH of TRP 2 may also be transmitted.

In an embodiment, the channels with the highest priority indexes (or lowest priority indexes) in the PUCCHs or PUSCHs may be compared to determine which physical channel may be transmitted. For example, it is assumed that TRP 1 schedules PUCCH1 (priority index 1) and PUSCH1 (priority index 0), and TRP 2 schedules PUCCH2 (priority index 0) and PUSCH2 (priority index 0), where PUSCH1 and PUSCH2 have the same priority index (priority index 0), and the PUCCH with a higher index in PUCCH1 and PUCCH2 is PUCCH1 (priority index 1), the priority indexes of PUCCH1 and PUSCH1 (or PUSCH2) may be compared to determine that PUCCH1 has the higher priority and may be transmitted, while PUSCH1 cannot be transmitted. Similarly, for terminals with simultaneous transmission capability of PUCCH, they may also transmit PUCCH1 and PUCCH2.

In an embodiment, priority comparison may be performed on the physical channels scheduled by each TRP first. If the two TRPs want to transmit the same type of physical channel after priority comparison, both may be transmitted; if the types of the physical channels that two TRPs want to transmit are different, the physical channels are continued to be compared through priority indexes to determine the final physical channel that may be transmitted.

In an embodiment, if the PUCCH or PUSCH has the same priority, the terminal may determine to drop which physical channel based on other methods, such as determining to drop which physical channel based on the priority of the content carried by the PUCCH or PUSCH, the *CORESETPoolIndex* value, the transmission scheme, etc.

In an embodiment, the terminal may determine to drop the PUCCH or PUSCH based on the *CORESETPoolIndex* value, such as dropping the transmission of channels with a specific *CORESETPoolIndex* value.

In an embodiment, the terminal may transmit channels with a *CORESETPoolIndex* value of 0 (or without configuring the *CORESETPoolIndex* parameter) and drop channels with a *CORESETPoolIndex* value of 1.

In an embodiment, the terminal may compare the *CORESETPoolIndex* values of all physical channels scheduled by the network side and select the physical channel with a *CORESETPoolIndex* value of 0 for transmission.

For example, TRP 1 *(CORESETPoolIndex* value of 0) schedules PUCCH1, and TRP 2 *(CORESETPoolIndex* value of 1) schedules PUCCH2 and PUSCH2. Therefore, the terminal may determine that PUCCH1 has the highest priority and may be transmitted.

In an embodiment, the terminal may compare a reference PUCCH or a reference PUSCH in the PUCCHs or PUSCHs to determine which physical channel may be transmitted.

For example, it is assumed that TRP 1 schedules PUCCH1 and TRP 2 schedules PUCCH2 and PUSCH2, where PUSCH2 (because there is only one PUSCH, PUSCH2 is used as a reference) corresponds to a *CORESETPoolIndex* value of 1, PUCCH1 or PUCCH2 with a smaller or a larger *CORESETPoolIndex* value may be used as a reference of PUCCH, such as PUCCH1 with the smaller *CORESETPoolIndex* value as the reference. The *CORESETPoolIndex* values of PUSCH2 and PUCCH1 determine that PUCCH may be transmitted and PUSCH cannot be transmitted. Similarly, for terminals with simultaneous transmission capability of PUCCH, they may also transmit PUCCH1 and PUCCH2.

In an embodiment, if the physical channel determined based on the *CORESETPoolIndex* value still includes PUCCH and PUSCH, other methods may be used to determine to drop which physical channel, such as determining to drop which physical channel based on the priority of the content carried by the physical channel, priority index, transmission scheme, etc..

In an embodiment, the terminal may determine to drop PUCCH or PUSCH based on the transmission scheme.

For example, physical channels configured for repetition or simultaneous transmission have higher priority. Repetition may be a TDM based repetition, or a FDM or SDM based repetition, and simultaneous transmission may be a PUCCH/PUSCH simultaneous transmission scheme scheduled by the same TRP or a CORESET with the same *CORESETPoolIndex* value.

Similarly, all physical channel transmission schemes scheduled by the network side may be compared to select the physical channel with higher priority for transmission.

For example, TRP 1 schedules PUCCH1 (single transmission), TRP 2 schedules PUCCH2 (simultaneous transmission or repetition) and PUSCH2 (single transmission), from which the terminal may determine that PUCCH2 has the highest priority and may be transmitted. Similarly, for terminals with simultaneous transmission capability of PUCCH, if the simultaneous transmission of PUCCH1 and PUCCH2 does not exceed the capability of the terminal, for example, PUCCH2 is a TDM based repetition, the terminal may also transmit PUCCH1 and PUCCH2.

In an embodiment, the terminal may compare a reference PUCCH or a reference PUSCH in the PUCCHs or PUSCHs to determine which physical channel may be transmitted. For example, it is assumed that TRP 1 schedules PUCCH1 (single transmission), TRP 2 schedules PUCCH2 (simultaneous transmission or repetition) and PUSCH2 (single transmission), where PUSCH2 (because there is only one PUSCH, PUSCH2 is used as a reference) is transmitted in a single transmission mode. PUCCH1 and PUCCH2 may use PUCCH with a higher transmission priority or a lower transmission priority as reference, such as PUCCH2 with higher transmission priority as a reference. By comparing the transmission schemes of PUSCH2 and PUCCH2, PUSCH cannot be transmitted. Similarly, for terminals with simultaneous transmission capability of PUCCH, if the simultaneous transmission of PUCCH1 and PUCCH2 does not exceed the capability of the terminal, the terminal may also transmit PUCCH1 and PUCCH2.

In an embodiment, the terminal may first compare the transmission priorities of the physical channels scheduled by each TRP. If the two TRPs want to transmit the same type of physical channel after priority comparison, both may be transmitted; if the types of physical channels that two TRPs want to transmit are different, the physical channels are continued to be compared through transmission priorities until the physical channel that may be transmitted is determined.

The present application does not limit the priority order of transmission schemes, and there may be other priorities. For example, FDM or SDM based repetition > TDM based repetition > FDM or SDM based simultaneous transmission > single transmission, etc.

If, after any comparison, the physical channels have the same priority, or the physical channels determined based on the transmission scheme priority still include PUCCH and PUSCH, other methods may be used to determine to drop which physical channel, such as determining to drop which physical channel based on the priority of the content carried by the physical channel, priority index, *CORESETPoolIndex* value, etc.

Method 4: the terminal determines to drop the PUCCH or PUSCH based on a certain condition or a criterion after UCI multiplexing.

Similar to Method 3, the terminal drops the PUCCH or PUSCH based on a certain condition or a criterion. The difference from Method 3 is that the terminal performs UCI multiplexing and then further determines to drop which physical channel based on the criteria.

The embodiments of the present application does not limit the UCI multiplexing method, which may be performed within channels scheduled by a TRP, within channels transmitted by a panel, or based on the RB index, TCI state, overlapping situation, etc. of the physical channel.

After UCI multiplexing, the physical channels that the terminal wants to transmit include the following three combinations:
PUCCH + PUCCH;
PUSCH + PUSCH; and
PUCCH + PUSCH.

Among the above three combinations, only the third case needs to be processed, and the quantity of processed physical channels is relatively small. The processing method is as follows.

The terminal may determine to drop the PUCCH or PUSCH based on the content carried by the PUCCH or PUSCH.

For example, a certain priority order of the carried content is set, such as data (PUSCH) > positive SR > A-CSI (PUSCH) > HARQ-ACK, etc. In case that a physical channel carries multiple contents, it may be determined to drop which channel based on one of the carried contents (such as the content with the highest priority or the content with the lowest priority). For example, PUSCH carries data and A-CSI, and PUCCH includes, after multiplexing multiple types of UCI, SR and HARQ-ACK. The content with the highest priority in PUSCH is data, and the content with the highest priority in PUCCH is SR. Based on this, it may be determined that PUSCH has a higher priority. Therefore, PUSCH is transmitted and PUCCH is dropped. For example, PUSCH transmits A-CSI and PUCCH transmits SR, from which it is determined that PUCCH has a higher priority. Therefore, PUCCH is transmitted and PUSCH is dropped. In addition, other priority orders of the carried content may also be used, and the terminal determines whether to drop PUSCH or PUCCH based on these orders.

In an embodiment, the terminal may determine to drop the PUCCH or PUSCH based on the priority index of the PUCCH or PUSCH, and drop channels with lower priority.

In an embodiment, the terminal may determine to drop a physical channel with the low priority based on the priority index (0 or 1) associated with the PUCCH or PUSCH. If the PUCCH has a high priority index (such as 1), the PUSCH is dropped and the PUCCH is transmitted; if PUSCH has a high priority index (such as 1), the PUCCH is dropped and the PUSCH is transmitted.

If the PUCCH or PUSCH has the same priority, other methods may be used to determine to drop which physical channel, such as determining to drop which physical channel based on the priority of the content carried in the PUCCH or PUSCH, the *CORESETPoolIndex* value, the transmission scheme, etc.

In an embodiment, the terminal may determine to drop the PUCCH or PUSCH based on the *CORESETPoolIndex* value, such as dropping the transmission of channels with a specific *CORESETPoolIndex* value.

For example, the terminal may transmit channels with a *CORESETPoolIndex* value of 0 (or without configuring the *CORESETPoolIndex* parameter) and drop channels with a *CORESETPoolIndex* value of 1.

If the *CORESETPoolIndex* value associated with PUCCH is 0, for example, scheduled by TRP or CORESET with *CORESETPoolIndex* value of 0, and the *CORESETPoolIndex* value associated with PUSCH is 1, then the PUCCH is transmitted and the PUSCH is dropped; if the *CORESETPoolIndex* value associated with PUCCH is 1, for example, scheduled by TRP or CORESET with *CORESETPoolIndex* value of 1, and the *CORESETPoolIndex* value associated with PUSCH is 0, then the PUSCH is transmitted and the PUCCH is dropped.

If the physical channels determined based on the *CORESETPoolIndex* value still contain PUCCH and PUSCH, that is, after UCI multiplexing, both PUCCH and PUSCH are associated with the same *CORESETPoolIndex* value, other methods may also be used to determine to drop which physical channel, such as determining to drop which physical channel based on the priority of the content carried by the physical channel, priority index, transmission scheme, etc. In an embodiment, if PUSCH meets the multiplexing condition, UCI may be further multiplexed and transmitted on PUSCH.

In an embodiment, the terminal may determine to drop PUCCH or PUSCH based on the transmission scheme.

For example, physical channels configured for repetition or simultaneous transmission have higher priority. Repetition may be a TDM based repetition, or a FDM or SDM based repetition, and simultaneous transmission may be a PUCCH/PUSCH simultaneous transmission scheme scheduled by the same TRP or a CORESET with the same *CORESETPoolIndex* value.

If the PUCCH transmission scheme has a higher priority (such as being configured for simultaneous transmission or repetition) and the PUSCH transmission scheme has a lower priority (such as single transmission), then the PUCCH is transmitted and the PUSCH is dropped; if the PUSCH transmission scheme has a higher priority (such as being configured for simultaneous transmission or repetition) and the PUCCH transmission scheme has a lower priority (such as single transmission), then the PUSCH is transmitted and the PUCCH is dropped.

The embodiments of the present application does not limit the priority order of transmission schemes, and there may be other priorities. For example, FDM or SDM based repetition > TDM based repetition > FDM or SDM based simultaneous transmission > single transmission, etc.

If PUCCH and PUSCH have the same transmission priority, other methods may be used to determine to drop which physical channel, such as determining to drop which physical channel based on the priority of the content carried by the physical channel, priority index, *CORESETPoolIndex* value, etc.

Method 5: the terminal may multiplex the UCI carried by the PUCCH on the PUSCH for transmission.

In an embodiment, before or after UCI multiplexing, the terminal may multiplex, if there is simultaneous transmission of the PUCCH and PUSCH (with overlap on at least one symbol), the UCI carried by the PUCCH on the PUSCH for transmission. In an embodiment, it may include the following situations.

UCI multiplexing may be performed based on the method of simultaneous transmission of UCI. If there is still a simultaneous transmission of PUCCH and PUSCH, the UCI carried by PUCCH may be multiplexed on PUSCH for transmission (performing two times of UCI multiplexing).

For example, UCI multiplexing is performed within physical channels associated with a TRP or a panel based on the RB index, TCI state, overlapping situation, etc. of the physical channel. At this point, UCI multiplexing between TRPs or panels is not involved. If there is still a simultaneous transmission of PUCCH and PUSCH, another UCI multiplexing is performed, such as UCI multiplexing between TRPs, and the UCI carried by PUCCH is multiplexed on PUSCH to avoid the occurrence of simultaneous transmission of PUCCH and PUSCH.

UCI multiplexing may be performed based on the method of simultaneous transmission of UCI. If there is still a simultaneous transmission of PUCCH and PUSCH, and if PUSCH still meets the UCI multiplexing condition, the UCI carried by PUCCH may be multiplexed on PUSCH for transmission; if PUSCH does not meet the UCI multiplexing condition, PUCCH or PUSCH is dropped using at least one of the Method 1 to Method 4.

A UCI multiplexing method is defined to ensure that all UCI carried by the PUCCH are multiplexed on the PUSCH for transmission (performing 1 UCI multiplexing).

In case of UCI multiplexing, the physical channels associated with two TRPs or two panels are jointly used for UCI multiplexing. For example, TRP 1 schedules PUCCH1 and PUSCH1, and TRP 2 schedules PUCCH2 and PUSCH2. A UCI multiplexing method may be defined to multiplex UCI on two PUSCHs for transmission.

In an embodiment, if TRP 1 schedules PUCCH1 and TRP 2 schedules PUCCH2 and PUSCH2, the UCI carried by PUCCH1 and PUCCH2 may be multiplexed on PUSCH2 for transmission, or a priority rule may be used to determine which UCI carried by PUCCH1 and PUCCH2 may be transmitted, and then the UCI that may be transmitted may be multiplexed on PUSCH2 for transmission.

In an embodiment, if TRP 1 schedules PUSCH 1 and TRP 2 schedules PUCCH2 and PUSCH2, the UCI carried by PUCCH2 may be multiplexed on PUSCH 1 or PUSCH2 for transmission, or the UCI carried by PUCCH2 may be multiplexed on PUSCH 1 and PUSCH2 for transmission.

The embodiments of the present application may avoid the situation of simultaneous transmission of PUCCH and PUSCH through UCI multiplexing.

In an embodiment, in case that performing simultaneous transmission of PUCCH+PUCCH, or simultaneous transmission of PUSCH and PUSCH, resources for PUSCH scheduled by two or more TRPs may overlap, and resources for PUCCH scheduled by two or more TRPs may also overlap. To reduce interference between physical channels, different scrambling may be applied to the PUCCHs or PUSCHs scheduled by two TRPs. For example, two PUSCH scrambling IDs (*dataScramblingIdentityPUSCH, dataScramblingIdentityPUSCH2*) may be configured under PUSCH configuration (higher level parameter PUCCH-Config), which are respectively associated with two TRPs, i.e. associated with different values of *CORESETPoolIndex* (such as 0 or 1). Similarly, for PUCCH transmission, multiple hoppingId values (*hoppingId, hoppingId2*) may be configured to be associated with different TRPs (*CORESETPoolIndex* values, 0 or 1) under the parameter PUCCH-ConfigCommon.

In an embodiment, the terminal may determine which channels may be transmitted or how to transmit based on various methods, and the network side also needs to know the corresponding transmission methods. One implementation is that there is an ideal backhaul between two or more TRPs on the network side, and the scheduling of the two or more TRPs may be exchanged through signaling. For example, one TRP schedules the PUCCH and PUSCH, and the other TRP only schedules the PUCCH. The transmission scheme, priority index, type and priority of content carried by the PUCCH or PUSCH of the two TRPs may also be exchanged.

In an embodiment, the terminal may report relevant transmission situations (which may be reported through radio resource control (RRC) and/or medium access control-control element (MAC-CE) signaling and/or UCI signaling), such as PUCCHs being dropped, PUSCHs being dropped, PUCCHs or PUSCHs with a specific *CORESETPoolIndex* value being dropped, the terminal performing PUCCHs+PUCCHs transmission, the terminal performing PUSCH+PUSCH transmission, transmission scrambling IDs (such as one or more of *dataScramblingIdentityPUSCH, dataScramblingIdentityPUSCH2, hoppingId, hoppingId2*)*,* etc. Thus, in case that multiple TRPs have a non-ideal backhaul, the report of the UE may also be used to determine the transmission status of the terminal, and then correctly demodulate the information transmitted from the terminal.

In an embodiment, the terminal may determine which PUSCH may be used to carry UCI in the following order: whether to transmit A-CSI, dynamic scheduling or configured grant scheduling, CC index (*ServCellIndex* value), and the order of PUSCH transmissions. It is unclear how to perform UCI transmission in case that there is simultaneous PUSCH transmission (such as FDM or SDM). The following method may be used to determine on which PUSCH UCI is multiplexed.

Method 6: the terminal determines on which PUSCH to multiplex UCI based on whether A-CSI is transmitted, dynamic scheduling or configured grant scheduling, CC index, simultaneous PUSCH transmission, and the order of PUSCH transmission times.

In an embodiment, if the UE transmits more than one PUSCHs over a slot on the CC with the minimum *ServCellIndex* value, and all PUSCHs meet the UCI multiplexing condition, and if the slot contains simultaneous PUSCH transmission (such as PUSCH FDM, SDM, SFN transmission, etc.), the UE multiplexes the UCI in one transmission occasion, repetition, layer group, or on one PUSCH of the simultaneously transmitted PUSCH. The specific multiplexing in which PUSCH transmission occasion, repetition, layer group, or on which PUSCH may be referred to the methods in other embodiments.

Method 7: the UE determines on which PUSCH to multiplex UCI based on whether A-CSI is transmitted, dynamic scheduling or configured grant scheduling, simultaneous PUSCH transmission, CC index, and the order of PUSCH transmission times.

In this method, simultaneous PUSCH transmission has a higher priority compared to CC index. If the terminal determines multiple PUSCHs based on the Rule 1 and Rule 2, and the multiple PUSCHs include PUSCHs for simultaneous transmission, the UE selects the PUSCH with the smaller CC index for transmission from the PUSCHs for simultaneous transmission. Furthermore, the specific one or more transmission occasions, repetitions, layer groups, or PUSCHs where UCI is multiplexed may depend on the UCI multiplexing method. For example, UCI multiplexing is determined based on parameters such as the RB index, TCI state, overlapping situation, *CORESETPoolIndex* of the physical channel. The present application does not limit the UCI multiplexing method.

For example, PUSCH1 and PUSCH2 on CC1 are transmitted simultaneously, PUSCH3 and PUSCH4 on CC2 are transmitted simultaneously, and PUSCH5 is transmitted on CC3. It is assumed that the indexes of the three CCs are CC1>CC2>CC3 with the lowest index, the physical channel with the lowest cell index is selected for transmission from the simultaneous transmission, that is, one or more PUSCHs from PUSCH3 or PUSCH4 transmitted simultaneously on CC2 are selected for transmission.

Method 8: the UE determines on which PUSCH to multiplex the UCI based on whether to transmit A-CSI, dynamic scheduling or configured grant scheduling, CC index, the order of PUSCH transmission times, and simultaneous PUSCH transmission.

In this method, simultaneous PUSCH transmission has a lower priority compared to the order of PUSCH transmissions. Based on the related art, UE may determine a PUSCH based on whether to transmit A-CSI, dynamic scheduling or configured grant scheduling, CC index, and the order of PUSCH transmissions. If the PUSCH adopts simultaneous transmission, UCI may be multiplexed in one or more PUSCHs for transmission based on parameters such as RB index, TCI state, overlapping situation, *CORESETPoolIndex,* etc. of the physical channel.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

FIG. 2 is schematic structural diagram of a first communication device according to an embodiment of the present application. As shown in FIG. 2, the first communication device includes a memory 220, a transceiver 200, and a processor 210, where
the memory 220 is used for storing a computer program; the transceiver 200 is used for receiving and transmitting data under control of the processor 210; and the processor 120 is used for reading the computer program in the memory 220 and performing the following operations:
in case that a first type channel and a second type channel are to be transmitted, performing any one or more of the following:
determining to transmit the first type channel or the second type channel; or
determining to multiplex a content carried by the first type channel in the second type channel for transmission.

In an embodiment, the transceiver 200 is used for receiving and transmitting data under control of the processor 210.

In FIG. 2, a bus architecture may include any number of interconnected buses and bridges, which are linked together through various circuits of one or more processors represented by the processor 210 and one or more memories represented by the memory 220. The bus architecture may also link various other circuits such as peripheral devices, voltage regulators, and power management circuits together, which are well-known in the art, and therefore are not further described in the present application. The bus interface provides an interface. The transceiver 200 may include multiple elements, i.e., including a transmitter and a receiver, units for providing communication with various other devices over transmission media including wireless channels, wired channels, fiber optic cables, and the like. For different user devices, the user interface may be an interface that may connect external and internal devices, including but not limited to keypads, displays, speakers, microphones, joysticks, etc.

The processor 210 is responsible for managing the bus architecture and general processing, and the memory 220 may store data used by the processor 210 when performing operations.

In an embodiment, the processor 210 may be a central processing unit (CPU), an application specific integrated circuit (ASIC), a field-programmable gate array (FPGA), or a complex programmable logic device (CPLD), the processor may also use a multi-core architecture.

The processor calls a computer program stored in memory to perform any one of the methods provided in the embodiments of the present application based on the obtained executable instructions. The processor and memory may also be physically separated.

In an embodiment, the processor 210 may be used for any one of the following:
dropping the second type channel and/or transmitting the first type channel based on a predefined rule or pre-configured information;
dropping the first type channel and/or transmitting the second type channel based on a predefined rule or pre-configured information; or
based on a pre-defined or pre-configured first rule, determining to drop the first type channel or the second type channel and/or transmitting the first type channel or the second type channel not being dropped.

In an embodiment, the processor 210 is used for:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
   the priority corresponding to the first type channel is a priority corresponding to the content carried by the first type channel; the priority corresponding to the second type channel is a priority corresponding to a content carried by the second type channel;
   the priority corresponding to the first type channel is a priority of the first type channel; the priority corresponding to the second type channel is a priority of the second type channel; or
   the priority corresponding to the first type channel is a priority corresponding to a transmission scheme of the first type channel; the priority corresponding to the second type channel is a priority corresponding to a transmission scheme of the second type channel.

In an embodiment, the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

In an embodiment, the processor 210 is used for any one or more of the following:
determining to drop a channel corresponding to a lowest priority between the first type channel and the second type channel;
determining to drop the first type channel or the second type channel based on a priority corresponding to transmission associated information, where the transmission associated information is information associated with the first type channel and/or the second type channel;
determining to drop a channel corresponding to a lowest priority between a first channel and a second channel, where the first channel is a channel corresponding to a highest priority among all the first type channels, and the second channel is a channel corresponding to a highest priority among all the second type channels;
determining to drop a channel corresponding to a lowest priority between a third channel and a fourth channel, where the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, where the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

In an embodiment, the priority corresponding to the transmission associated information is a lowest priority or a highest priority among a priority corresponding to each of the first type channels and/or each of the second type channels associated with the transmission associated information, or
the priority corresponding to the transmission associated information is a lowest priority or a highest priority among a priority corresponding to each of the first reference channels in the first type channels and/or each of the second reference channels in the second type channels associated with the transmission associated information.

In an embodiment, an order of the priority corresponding to the content carried by the first type channel and/or the priority corresponding to the content carried by the second type channel from high to low includes:
data, SR, A-CSI, and HARQ-ACK.

In an embodiment, an order of the priority corresponding to the transmission scheme of the first type channel and/or the priority corresponding to the transmission scheme of the second type channel includes:
a priority corresponding to a first transmission scheme is higher than a priority corresponding to a single transmission, where the first transmission scheme includes any one or more of the following: frequency division multiplexing (FDM) based repetition or space division multiplexing (SDM) based repetition, time division multiplexing (TDM) based repetition, or FDM based simultaneous transmission or SDM based simultaneous transmission; or
a priority corresponding to a single transmission is higher than a priority corresponding to a second transmission scheme, where the second transmission scheme includes any one or more of the following: frequency division multiplexing (FDM) based repetition or space division multiplexing (SDM) based repetition, time division multiplexing (TDM) based repetition, or FDM based simultaneous transmission or SDM based simultaneous transmission; or
a priority corresponding to a single transmission is higher than a priority corresponding to a third transmission scheme, and the priority corresponding to the single transmission is lower than a priority corresponding to a fourth transmission scheme, where the third transmission scheme and the fourth transmission scheme include any one or more of the following:
   frequency division multiplexing (FDM) based repetition or space division multiplexing (SDM) based repetition, time division multiplexing (TDM) based repetition, or FDM based simultaneous transmission or SDM based simultaneous transmission.

In an embodiment, the processor 210 is used for:
determining to drop the first type channel or the second type channel based on a first value corresponding to the first type channel and a second value corresponding to the second type channel.

In an embodiment, the first value corresponding to the first type channel is a value of a third reference channel among all the first type channels, and the second value corresponding to the second type channel is a value of a fourth reference channel among all the second type channels.

In an embodiment, the processor 210 is used for:
dropping the second type channel and/or transmitting the first type channel before uplink control information (UCI) multiplexing; or
dropping the second type channel and/or transmitting the first type channel after uplink control information (UCI) multiplexing;
the processor 210 is used for:
   dropping the first type channel and/or transmitting the second type channel before UCI multiplexing; or
   dropping the first type channel and/or transmitting the second type channel after UCI multiplexing.

In an embodiment, the processor 210 is used for:
in case of presence of the first type channel and the second type channel, multiplexing the content carried by the first type channel in the second type channel.

In an embodiment, the processor 210 is used for:
determining a target channel in the second type channel; and
determining to multiplex the content carried by the first type channel on the target channel for transmission.

In an embodiment, the processor 210 is used for:
determining the target channel as a channel corresponding to a highest priority among all the second type channels.

In an embodiment, the processor 210 is used for:
determining the target channel based on a first order, where the first order includes any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times; or
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission;
the first CC index is a smallest index, or a predefined index, or a largest index among all CC indexes.

In an embodiment, the processor 210 is used for any one or more of the following:
transmitting multiple second type channels over a time unit of a CC with the first CC index, and in case that the time unit contains simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels;
determining one or more second type channels based on a transmission time of the first type channel and/or the second type channel, and in case that the one or more second type channels include a simultaneous transmission, multiplexing the first type channel in one or more simultaneously transmitted second type channels for transmission; or
in case that the second type channel is simultaneously transmitted, multiplexing the content carried by the first type channel in the second type channel for transmission based on a parameter *CORESETPoolIndex.*

It should be noted that the first communication device provided in embodiments of the present application may implement all the method steps implemented by the method embodiment with the first communication device as the executing subject, and may achieve the same technical effects. The same parts and beneficial effects as the method embodiment in this embodiment are not repeated.

FIG. 3 is a schematic structural diagram of a transmission apparatus according to an embodiment of the present application. As shown in FIG. 3, the transmission apparatus 300 includes: a first performing module 310, where
the first performing module 310 is used for in case that a first type channel and a second type channel are to be transmitted, performing any one or more of the following:
determining to transmit the first type channel or the second type channel; or
determining to multiplex a content carried by the first type channel in the second type channel for transmission.

The transmission apparatus provided in embodiments of the present application may implement the various procedures of the above-mentioned method embodiments and achieve the same technical effect. To avoid repetition, the same parts and beneficial effects not be repeated here.

In an embodiment, the first performing module 310 is used for any one of the following:
dropping the second type channel and/or transmitting the first type channel based on a predefined rule or pre-configured information;
dropping the first type channel and/or transmitting the second type channel based on a predefined rule or pre-configured information; or
based on a pre-defined or pre-configured first rule, determining to drop the first type channel or the second type channel and/or transmitting the first type channel or the second type channel not being dropped.

In an embodiment, the first performing module 310 is used for:
determining to drop the first type channel or the second type channel based on a pre-defined or pre-configured first rule, including:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
   the priority corresponding to the first type channel is a priority corresponding to the content carried by the first type channel; the priority corresponding to the second type channel is a priority corresponding to a content carried by the second type channel;
   the priority corresponding to the first type channel is a priority of the first type channel; the priority corresponding to the second type channel is a priority of the second type channel; or
   the priority corresponding to the first type channel is a priority corresponding to a transmission scheme of the first type channel; the priority corresponding to the second type channel is a priority corresponding to a transmission scheme of the second type channel.

In an embodiment, the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

In an embodiment, the first performing module 310 is used for any one or more of the following:
determining to drop a channel corresponding to a lowest priority between the first type channel and the second type channel;
determining to drop the first type channel or the second type channel based on a priority corresponding to transmission associated information, where the transmission associated information is information associated with the first type channel and/or the second type channel;
determining to drop a channel corresponding to a lowest priority between a first channel and a second channel, where the first channel is a channel corresponding to a highest priority among all the first type channels, and the second channel is a channel corresponding to a highest priority among all the second type channels;
determining to drop a channel corresponding to a lowest priority between a third channel and a fourth channel, where the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, where the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

In an embodiment, the priority corresponding to the transmission associated information is a lowest priority or a highest priority among a priority corresponding to each of the first type channels and/or each of the second type channels associated with the transmission associated information, or
the priority corresponding to the transmission associated information is a lowest priority or a highest priority among a priority corresponding to each of the first reference channels in the first type channels and/or each of the second reference channels in the second type channels associated with the transmission associated information.

In an embodiment, an order of the priority corresponding to the content carried by the first type channel and/or the priority corresponding to the content carried by the second type channel from high to low includes:
data, SR, A-CSI, and HARQ-ACK.

In an embodiment, an order of the priority corresponding to the transmission scheme of the first type channel and/or the priority corresponding to the transmission scheme of the second type channel includes:
a priority corresponding to a first transmission scheme is higher than a priority corresponding to a single transmission, where the first transmission scheme includes any one or more of the following: frequency division multiplexing (FDM) based repetition or space division multiplexing (SDM) based repetition, time division multiplexing (TDM) based repetition, or FDM based simultaneous transmission or SDM based simultaneous transmission; or
a priority corresponding to a single transmission is higher than a priority corresponding to a second transmission scheme, where the second transmission scheme includes any one or more of the following: frequency division multiplexing (FDM) based repetition or space division multiplexing (SDM) based repetition, time division multiplexing (TDM) based repetition, or FDM based simultaneous transmission or SDM based simultaneous transmission; or
a priority corresponding to a single transmission is higher than a priority corresponding to a third transmission scheme, and the priority corresponding to the single transmission is lower than a priority corresponding to a fourth transmission scheme, where the third transmission scheme and the fourth transmission scheme include any one or more of the following:
   frequency division multiplexing (FDM) based repetition or space division multiplexing (SDM) based repetition, time division multiplexing (TDM) based repetition, or FDM based simultaneous transmission or SDM based simultaneous transmission.

In an embodiment, the first performing module 310 is used for:
determining to drop the first type channel or the second type channel based on a first value corresponding to the first type channel and a second value corresponding to the second type channel.

In an embodiment, the first value corresponding to the first type channel is a value of a third reference channel among all the first type channels, and the second value corresponding to the second type channel is a value of a fourth reference channel among all the second type channels.

In an embodiment, the first performing module 310 is used for:
dropping the second type channel and/or transmitting the first type channel before uplink control information (UCI) multiplexing; or
dropping the second type channel and/or transmitting the first type channel after uplink control information (UCI) multiplexing;
the first performing module 310 is used for:
   dropping the first type channel and/or transmitting the second type channel before UCI multiplexing; or
   dropping the first type channel and/or transmitting the second type channel after UCI multiplexing.

In an embodiment, the first performing module 310 is used for:
in case of presence of the first type channel and the second type channel, multiplexing the content carried by the first type channel in the second type channel.

In an embodiment, the first performing module 310 is used for:
determining a target channel in the second type channel; and
determining to multiplex the content carried by the first type channel on the target channel for transmission.

In an embodiment, the first performing module 310 is used for:
determining the target channel as a channel corresponding to a highest priority among all the second type channels.

In an embodiment, the apparatus further includes:
a determining module, used for determining the target channel based on a first order, where the first order includes any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times; or
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission;
the first CC index is a smallest index, or a predefined index, or a largest index among all CC indexes.

In an embodiment, the first performing module 310 is used for any one or more of the following:
transmitting multiple second type channels over a time unit of a CC with the first CC index, and in case that the time unit contains simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels;
determining one or more second type channels based on a transmission time of the first type channel and/or the second type channel, and in case that the one or more second type channels include a simultaneous transmission, multiplexing the first type channel in one or more simultaneously transmitted second type channels for transmission; or
in case that the second type channel is simultaneously transmitted, multiplexing the content carried by the first type channel in the second type channel for transmission based on a parameter *CORESETPoolIndex.*

It should be noted that the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In case that the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a USB flash disk, a mobile hard disk, a read-only memory (ROM), a random access memory (RAM), a magnetic disk, or a compact disk.

It should be noted that the above-mentioned apparatus provided in embodiments of the present application may achieve all the method steps implemented in the above-mentioned method embodiment, and may achieve the same technical effects. Specific descriptions of the same parts and beneficial effects as the method embodiment in this embodiment are not repeated here.

Embodiments of the present application further provide a processor-readable storage medium, which stores a computer program for causing a processor to perform the methods provided in the above embodiments.

The computer-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied in one or more computer-usable storage media having computer-usable program code embodied therein, including but not limited to disk storage, optical storage, and the like.

The present application is described with reference to flow charts and/or block diagrams of methods, device (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A transmission method, performed by a first communication device, comprising:
in case that a first type channel and a second type channel are to be transmitted, performing any one or more of the following:
determining to transmit the first type channel or the second type channel; or
determining to multiplex a content carried by the first type channel in the second type channel for transmission.

2. The transmission method of claim 1, wherein determining to transmit the first type channel or the second type channel comprises any one of the following:
dropping the first type channel and/or transmitting the second type channel based on a predefined rule or pre-configured information;
dropping the second type channel and/or transmitting the first type channel based on a predefined rule or pre-configured information; or
based on a pre-defined or pre-configured first rule, determining to drop the first type channel or the second type channel and/or transmitting the first type channel or the second type channel not being dropped.

3. The transmission method of claim 2, wherein determining to drop the first type channel or the second type channel based on the pre-defined or pre-configured first rule comprises:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
the priority corresponding to the first type channel is a priority corresponding to the content carried by the first type channel; the priority corresponding to the second type channel is a priority corresponding to a content carried by the second type channel;
the priority corresponding to the first type channel is a priority of the first type channel; the priority corresponding to the second type channel is a priority of the second type channel; or
the priority corresponding to the first type channel is a priority corresponding to a transmission scheme of the first type channel; the priority corresponding to the second type channel is a priority corresponding to a transmission scheme of the second type channel.

4. The transmission method of claim 3, wherein the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

5. The transmission method of claim 3, wherein determining to drop the first type channel or the second type channel based on the pre-defined or pre-configured first rule comprises any one or more of the following:
determining to drop a channel corresponding to a lowest priority between the first type channel and the second type channel;
determining to drop the first type channel or the second type channel based on a priority corresponding to transmission associated information, wherein the transmission associated information is information associated with the first type channel and/or the second type channel;
determining to drop a channel corresponding to a lowest priority between a first channel and a second channel, wherein the first channel is a channel corresponding to a highest priority among all the first type channels, and the second channel is a channel corresponding to a highest priority among all the second type channels;
determining to drop a channel corresponding to a lowest priority between a third channel and a fourth channel, wherein the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, wherein the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

6. The transmission method of claim 5, wherein the priority corresponding to the transmission associated information is a lowest priority or a highest priority among a priority corresponding to each of the first type channels and/or each of the second type channels associated with the transmission associated information; or
the priority corresponding to the transmission associated information is a lowest priority or a highest priority among a priority corresponding to each of the first reference channels in the first type channels and/or each of the second reference channels in the second type channels associated with the transmission associated information.

7. The transmission method of claim 3, wherein an order of the priority corresponding to the content carried by the first type channel and/or the priority corresponding to the content carried by the second type channel from high to low comprises:
data, scheduling request (SR), aperiodic channel state information (A-CSI), and hybrid automatic repeat request acknowledgement (HARQ-ACK).

8. The transmission method of claim 3, wherein an order of the priority corresponding to the transmission scheme of the first type channel and/or the priority corresponding to the transmission scheme of the second type channel comprises:
a priority corresponding to a first transmission scheme is higher than a priority corresponding to a single transmission, wherein the first transmission scheme comprises any one or more of the following: frequency division multiplexing (FDM) based repetition or space division multiplexing (SDM) based repetition, time division multiplexing (TDM) based repetition, or FDM based simultaneous transmission or SDM based simultaneous transmission;
or
a priority corresponding to a single transmission is higher than a priority corresponding to a second transmission scheme, wherein the second transmission scheme comprises any one or more of the following: frequency division multiplexing (FDM) based repetition or space division multiplexing (SDM) based repetition, time division multiplexing (TDM) based repetition, or FDM based simultaneous transmission or SDM based simultaneous transmission;
or
a priority corresponding to a single transmission is higher than a priority corresponding to a third transmission scheme, and the priority corresponding to the single transmission is lower than a priority corresponding to a fourth transmission scheme, wherein the third transmission scheme and the fourth transmission scheme comprise any one or more of the following:
frequency division multiplexing (FDM) based repetition or space division multiplexing (SDM) based repetition, time division multiplexing (TDM) based repetition, or FDM based simultaneous transmission or SDM based simultaneous transmission.

9. The transmission method of claim 2, wherein determining to drop the first type channel or the second type channel based on the pre-defined or pre-configured first rule comprises:
determining to drop the first type channel or the second type channel based on a first value corresponding to the first type channel and a second value corresponding to the second type channel.

10. The transmission method of claim 8, wherein the first value corresponding to the first type channel is a value of a third reference channel among all the first type channels, and the second value corresponding to the second type channel is a value of a fourth reference channel among all the second type channels.

11. The transmission method of any one of claims 2-10, wherein dropping the second type channel and/or transmitting the first type channel comprises:
dropping the second type channel and/or transmitting the first type channel before uplink control information (UCI) multiplexing; or
dropping the second type channel and/or transmitting the first type channel after uplink control information (UCI) multiplexing;
dropping the first type channel and/or transmitting the second type channel comprises:
dropping the first type channel and/or transmitting the second type channel before UCI multiplexing; or
dropping the first type channel and/or transmitting the second type channel after UCI multiplexing.

12. The transmission method of claim 1, wherein determining to multiplex the content carried by the first type channel in the second type channel for transmission comprises:
in case of presence of the first type channel and the second type channel, multiplexing the content carried by the first type channel in the second type channel.

13. The transmission method of claim 1 or 12, wherein determining to multiplex the content carried by the first type channel in the second type channel for transmission comprises:
determining a target channel in the second type channel; and
determining to multiplex the content carried by the first type channel on the target channel for transmission.

14. The transmission method of claim 13, wherein determining the target channel in the second type channel comprises:
determining the target channel as a channel corresponding to a highest priority among all the second type channels.

15. The transmission method of claim 13, wherein the method further comprises:
determining the target channel based on a first order, wherein the first order comprises any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times;
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission;
the first CC index is a smallest index, or a predefined index, or a largest index among all CC indexes.

16. The transmission method of any one of claims 1 or 12-15, wherein determining to multiplex the content carried by the first type channel in the second type channel for transmission comprises any one or more of the following:
transmitting multiple second type channels over a time unit of a carrier component (CC) with a first carrier component (CC) index, and in case that the time unit contains a simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels;
determining one or more second type channels based on a transmission time of the first type channel and/or the second type channel, and in case that the one or more second type channels comprise a simultaneous transmission, multiplexing the first type channel in one or more simultaneously transmitted second type channels for transmission; or
multiplexing the content carried by the first type channel in the second type channel for transmission based on a parameter *CORESETPoolIndex.*

17. A first communication device, comprising a memory, a transceiver, and a processor, wherein
the memory is used for storing a computer program; the transceiver is used for receiving and transmitting data under control of the processor; and the processor is used for reading the computer program in the memory and performing the following operations:
in case that a first type channel and a second type channel are to be transmitted, performing any one or more of the following:
determining to transmit the first type channel or the second type channel; or
determining to multiplex a content carried by the first type channel in the second type channel for transmission.

18. The first communication device of claim 17, wherein determining to transmit the first type channel or the second type channel comprises any one of the following:
dropping the first type channel and/or transmitting the second type channel based on a predefined rule or pre-configured information;
dropping the second type channel and/or transmitting the first type channel based on a predefined rule or pre-configured information; or
based on a pre-defined or pre-configured first rule, determining to drop the first type channel or the second type channel and/or transmitting the first type channel or the second type channel not being dropped.

19. The first communication device of claim 18, wherein determining to drop the first type channel or the second type channel based on the pre-defined or pre-configured first rule comprises:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
the priority corresponding to the first type channel is a priority corresponding to the content carried by the first type channel; the priority corresponding to the second type channel is a priority corresponding to a content carried by the second type channel;
the priority corresponding to the first type channel is a priority of the first type channel; the priority corresponding to the second type channel is a priority of the second type channel; or
the priority corresponding to the first type channel is a priority corresponding to a transmission scheme of the first type channel; the priority corresponding to the second type channel is a priority corresponding to a transmission scheme of the second type channel.

20. The first communication device of claim 19, wherein the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

21. The first communication device of claim 19, wherein determining to drop the first type channel or the second type channel based on the pre-defined or pre-configured first rule comprises any one or more of the following:
determining to drop a channel corresponding to a lowest priority between the first type channel and the second type channel;
determining to drop the first type channel or the second type channel based on a priority corresponding to transmission associated information, wherein the transmission associated information is information associated with the first type channel and/or the second type channel;
determining to drop a channel corresponding to a lowest priority between a first channel and a second channel, wherein the first channel is a channel corresponding to a highest priority among all the first type channels, and the second channel is a channel corresponding to a highest priority among all the second type channels;
determining to drop a channel corresponding to a lowest priority between a third channel and a fourth channel, wherein the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, wherein the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

22. The first communication device of claim 21, wherein the priority corresponding to the transmission associated information is a lowest priority or a highest priority among a priority corresponding to each of the first type channels and/or each of the second type channels associated with the transmission associated information; or
the priority corresponding to the transmission associated information is a lowest priority or a highest priority among a priority corresponding to each of the first reference channels in the first type channels and/or each of the second reference channels in the second type channels associated with the transmission associated information.

23. The first communication device of claim 19, wherein an order of the priority corresponding to the content carried by the first type channel and/or the priority corresponding to the content carried by the second type channel from high to low comprises:
data, scheduling request (SR), aperiodic channel state information (A-CSI), and hybrid automatic repeat request acknowledgement (HARQ-ACK).

24. The first communication device of claim 19, wherein an order of the priority corresponding to the transmission scheme of the first type channel and/or the priority corresponding to the transmission scheme of the second type channel comprises:
a priority corresponding to a first transmission scheme is higher than a priority corresponding to a single transmission, wherein the first transmission scheme comprises any one or more of the following: frequency division multiplexing (FDM) based repetition or space division multiplexing (SDM) based repetition, time division multiplexing (TDM) based repetition, or, FDM based simultaneous transmission or SDM based simultaneous transmission;
or
a priority corresponding to a single transmission is higher than a priority corresponding to a second transmission scheme, wherein the second transmission scheme comprises any one or more of the following: frequency division multiplexing (FDM) based repetition or space division multiplexing (SDM) based repetition, time division multiplexing (TDM) based repetition, or, FDM based simultaneous transmission or SDM based simultaneous transmission;
or
a priority corresponding to a single transmission is higher than a priority corresponding to a third transmission scheme, and the priority corresponding to the single transmission is lower than a priority corresponding to a fourth transmission scheme, wherein the third transmission scheme and the fourth transmission scheme comprise any one or more of the following:
frequency division multiplexing (FDM) based repetition or space division multiplexing (SDM) based repetition, time division multiplexing (TDM) based repetition, or, FDM based simultaneous transmission or SDM based simultaneous transmission.

25. The first communication device of claim 18, wherein determining to drop the first type channel or the second type channel based on the pre-defined or pre-configured first rule comprises:
determining to drop the first type channel or the second type channel based on a first value corresponding to the first type channel and a second value corresponding to the second type channel.

26. The first communication device of claim 24, wherein the first value corresponding to the first type channel is a value of a third reference channel among all the first type channels, and the second value corresponding to the second type channel is a value of a fourth reference channel among all the second type channels.

27. The first communication device of any one of claims 18-26, wherein dropping the second type channel and/or transmitting the first type channel comprises:
dropping the second type channel and/or transmitting the first type channel before uplink control information (UCI) multiplexing; or
dropping the second type channel and/or transmitting the first type channel after uplink control information (UCI) multiplexing;
dropping the first type channel and/or transmitting the second type channel comprises:
dropping the first type channel and/or transmitting the second type channel before UCI multiplexing; or
dropping the first type channel and/or transmitting the second type channel after UCI multiplexing.

28. The first communication device of claim 17, wherein determining to multiplex the content carried by the first type channel in the second type channel for transmission comprises:
in case of presence of the first type channel and the second type channel, multiplexing the content carried by the first type channel in the second type channel.

29. The first communication device of claim 17 or 28, wherein determining to multiplex the content carried by the first type channel in the second type channel for transmission comprises:
determining a target channel in the second type channel; and
determining to multiplex the content carried by the first type channel on the target channel for transmission.

30. The first communication device of claim 29, wherein determining the target channel in the second type channel comprises:
determining the target channel as a channel corresponding to a highest priority among all the second type channels.

31. The first communication device of claim 30, wherein the operations further comprise:
determining the target channel based on a first order, wherein the first order comprises any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times;
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission;
the first CC index is a smallest index, or a predefined index, or a largest index among all CC indexes.

32. The first communication device of any one of claims 17 or 28-31, wherein determining to multiplex the content carried by the first type channel in the second type channel for transmission comprises any one or more of the following:
transmitting multiple second type channels over a time unit of a carrier component (CC) with a first carrier component (CC) index, and in case that the time unit contains simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels;
determining one or more second type channels based on a transmission time of the first type channel and/or the second type channel, and in case that the one or more second type channels comprise a simultaneous transmission, multiplexing the first type channel in one or more simultaneously transmitted second type channels for transmission; or
multiplexing the content carried by the first type channel in the second type channel for transmission based on a parameter *CORESETPoolIndex.*

33. A transmission apparatus, comprising:
a first performing module, used for in case that a first type channel and a second type channel are to be transmitted, performing any one or more of the following:
determining to transmit the first type channel or the second type channel; or
determining to multiplex a content carried by the first type channel in the second type channel for transmission.

34. The transmission apparatus of claim 33, wherein the first performing module is used for any one of the following:
dropping the first type channel and/or transmitting the second type channel based on a predefined rule or pre-configured information;
dropping the second type channel and/or transmitting the first type channel based on a predefined rule or pre-configured information; or
based on a pre-defined or pre-configured first rule, determining to drop the first type channel or the second type channel and/or transmitting the first type channel or the second type channel not being dropped.

35. The transmission apparatus of claim 34, wherein the first performing module is used for:
determining to drop the first type channel or the second type channel based on the pre-defined or pre-configured first rule, comprising:
determining to drop a channel corresponding to a lowest priority based on a priority corresponding to the first type channel and a priority corresponding to the second type channel;
the priority corresponding to the first type channel and the priority corresponding to the second type channel meet any one or more of the following:
the priority corresponding to the first type channel is a priority corresponding to the content carried by the first type channel; the priority corresponding to the second type channel is a priority corresponding to a content carried by the second type channel;
the priority corresponding to the first type channel is a priority of the first type channel; the priority corresponding to the second type channel is a priority of the second type channel; or
the priority corresponding to the first type channel is a priority corresponding to a transmission scheme of the first type channel; the priority corresponding to the second type channel is a priority corresponding to a transmission scheme of the second type channel.

36. The transmission apparatus of claim 35, wherein the priority corresponding to the content carried by the first type channel is a highest priority among priorities corresponding to all the contents carried by the first type channel, and the priority corresponding to the content carried by the second type channel is a highest priority among priorities corresponding to all the contents carried by the second type channel; or
the priority corresponding to the content carried by the first type channel is a lowest priority among priorities corresponding to all the contents carried by the first type channel, and the priority corresponding to the content carried by the second type channel is a lowest priority among priorities corresponding to all the contents carried by the second type channel; or
the priority corresponding to the content carried by the first type channel is a highest priority among priorities corresponding to all contents carried by a first reference channel in the first type channel, and the priority corresponding to the content carried by the second type channel is a highest priority among priorities corresponding to all contents carried by a second reference channel in the second type channel; or
the priority corresponding to the content carried by the first type channel is a lowest priority among priorities corresponding to all contents carried by a first reference channel in the first type channel, and the priority corresponding to the content carried by the second type channel is a lowest priority among priorities corresponding to all contents carried by a second reference channel in the second type channel.

37. The transmission apparatus of claim 35, wherein the first performing module is used for any one or more of the following:
determining to drop a channel corresponding to a lowest priority between the first type channel and the second type channel;
determining to drop the first type channel or the second type channel based on a priority corresponding to transmission associated information, wherein the transmission associated information is information associated with the first type channel and/or the second type channel;
determining to drop a channel corresponding to a lowest priority between a first channel and a second channel, wherein the first channel is a channel corresponding to a highest priority among all the first type channels, and the second channel is a channel corresponding to a highest priority among all the second type channels;
determining to drop a channel corresponding to a lowest priority between a third channel and a fourth channel, wherein the third channel is a channel corresponding to a lowest priority among all the first type channels, and the fourth channel is a channel corresponding to a lowest priority among all the second type channels;
determining to drop a channel corresponding to a reference channel corresponding to a lowest priority between a first reference channel and a second reference channel, wherein the first reference channel corresponds to the first type channel and the second reference channel corresponds to the second type channel;
comparing a priority corresponding to each of all the first type channels and a priority corresponding to each of all the second type channels in pairs until a channel corresponding to a lowest priority between the first type channel and the second type channel is determined, and determining to drop the channel corresponding to the lowest priority; or
determining to drop a channel corresponding to a lowest priority among a priority corresponding to each of all the first type channels and a priority corresponding to each of all the second type channels.

38. The transmission apparatus of claim 37, wherein the priority corresponding to the transmission associated information is a lowest priority or a highest priority among a priority corresponding to each of the first type channels and/or each of the second type channels associated with the transmission associated information; or
the priority corresponding to the transmission associated information is a lowest priority or a highest priority among a priority corresponding to each of the first reference channels in the first type channels and/or each of the second reference channels in the second type channels associated with the transmission associated information.

39. The transmission apparatus of claim 35, wherein an order of the priority corresponding to the content carried by the first type channel and/or the priority corresponding to the content carried by the second type channel from high to low comprises:
data, scheduling request (SR), aperiodic channel state information (A-CSI), and hybrid automatic repeat request acknowledgement (HARQ-ACK).

40. The transmission apparatus of claim 35, wherein an order of the priority corresponding to the transmission scheme of the first type channel and/or the priority corresponding to the transmission scheme of the second type channel comprises:
a priority corresponding to a first transmission scheme is higher than a priority corresponding to a single transmission, wherein the first transmission scheme comprises any one or more of the following: frequency division multiplexing (FDM) based repetition or space division multiplexing (SDM) based repetition, time division multiplexing (TDM) based repetition, or, FDM based simultaneous transmission or SDM based simultaneous transmission;
or
a priority corresponding to a single transmission is higher than a priority corresponding to a second transmission scheme, wherein the second transmission scheme comprises any one or more of the following: frequency division multiplexing (FDM) based repetition or space division multiplexing (SDM) based repetition, time division multiplexing (TDM) based repetition, or, FDM based simultaneous transmission or SDM based simultaneous transmission;
or
a priority corresponding to a single transmission is higher than a priority corresponding to a third transmission scheme, and the priority corresponding to the single transmission is lower than a priority corresponding to a fourth transmission scheme, wherein the third transmission scheme and the fourth transmission scheme comprise any one or more of the following:
frequency division multiplexing (FDM) based repetition or space division multiplexing (SDM) based repetition, time division multiplexing (TDM) based repetition, or, FDM based simultaneous transmission or SDM based simultaneous transmission.

41. The transmission apparatus of claim 34, wherein the first performing module is used for:
determining to drop the first type channel or the second type channel based on a first value corresponding to the first type channel and a second value corresponding to the second type channel.

42. The transmission apparatus of claim 40, wherein the first value corresponding to the first type channel is a value of a third reference channel among all the first type channels, and the second value corresponding to the second type channel is a value of a fourth reference channel among all the second type channels.

43. The transmission apparatus of any one of claims 34-42, wherein the first performing module is used for:
dropping the second type channel and/or transmitting the first type channel before uplink control information (UCI) multiplexing;
dropping the second type channel and/or transmitting the first type channel after uplink control information (UCI) multiplexing;
the first performing module is used for:
dropping the first type channel and/or transmitting the second type channel before UCI multiplexing; or
dropping the first type channel and/or transmitting the second type channel after UCI multiplexing.

44. The transmission apparatus of claim 33, wherein the first performing module is used for:
in case of presence of the first type channel and the second type channel, multiplexing the content carried by the first type channel in the second type channel.

45. The transmission apparatus of claim 33 or 44, wherein the first performing module is used for:
determining a target channel in the second type channel; and
determining to multiplex the content carried by the first type channel on the target channel for transmission.

46. The transmission apparatus of claim 45, wherein the first performing module is used for:
determining the target channel as a channel corresponding to a highest priority among all the second type channels.

47. The transmission apparatus of claim 46, wherein the apparatus further comprises:
a determining module, used for determining the target channel based on a first order, wherein the first order comprises any one or more of the following:
channel for transmitting aperiodic channel state information (A-CSI), channel dynamically scheduled or scheduled by configured grant, channel corresponding to a first carrier component (CC) index, channel for simultaneous transmission, and each of channels corresponding to different transmission times;
channel for transmitting aperiodic channel state information (A-CSI), channel dynamically scheduled or scheduled by configured grant, channel for simultaneous transmission, channel corresponding to a first carrier component (CC) index, and each of channels corresponding to different transmission times; or
channel for transmitting aperiodic channel state information (A-CSI), channel dynamically scheduled or scheduled by configured grant, channel corresponding to a first carrier component (CC) index, each of channels corresponding to different transmission times, and channel for simultaneous transmission;
the first CC index is a smallest index, or a predefined index, or a largest index among all CC indexes.

48. The transmission apparatus of any one of claims 33 or 44-47, wherein the first performing module is used for any one or more of the following:
transmitting multiple second type channels over a time unit of a carrier component (CC) with a first carrier component (CC) index, and in case that the time unit contains a simultaneous transmission of the second type channel, multiplexing the first type channel in one or more transmission occasions, repetitions, layer groups corresponding to the simultaneously transmitted second type channel, or multiplexing the first type channel in one or more simultaneously transmitted second type channels;
multiplexing the first type channel on a second type channel with the first CC index among the simultaneously transmitted second type channels;
determining one or more second type channels based on a transmission time of the first type channel and/or the second type channel, and in case that the one or more second type channels comprise a simultaneous transmission, multiplexing the first type channel in one or more simultaneously transmitted second type channels for transmission; or
multiplexing the content carried by the first type channel in the second type channel for transmission based on a parameter *CORESETPoolIndex.*

49. A processor-readable storage medium storing a computer program, wherein the computer program is used for causing a processor to perform any one of the methods of claims 1 to 16.
